# EUROPEAN PATENT SPECIFICATION

(11) **EP 3 288 658 B1**
(45) Date of publication and mention of the grant of the patent: **26.08.2020**
(21) Application number: 16787156.5
(22) Date of filing: 28.04.2016
(51) Int. Cl.: B01D 15/30, B01D 15/32, B01D 15/36, B01D 15/40, B01J 20/10, B01J 20/28, B01J 20/286, B01J 20/288, B01J 20/32, B01D 15/38

(54) **HIGH PURITY CHROMATOGRAPHIC MATERIALS COMPRISING ION PAIRED-BONDED PHASES FOR SUPERCRITICAL FLUID CHROMATOGRAPHY**
HOCHREINE CHROMATOGRAPHIEMATERIALIEN MIT IONENPAARWEISE GEBUNDENEN PHASEN FÜR SUPERKRITISCHE FLUIDCHROMATOGRAPHIE
MATÉRIAUX CHROMATOGRAPHIQUES DE GRANDE PURETÉ COMPRENANT DES PHASES LIÉES À DES IONS APPARIÉS POUR UNE CHROMATOGRAPHIE À FLUIDE SUPERCRITIQUE

(30) Priority: 29.04.2015 US 201562154451 P
(43) Date of publication of application: 07.03.2018
(73) Proprietor: Waters Technologies Corporation, Milford, MA 01757 (US); Brousmiche, Darryl W., Grafton, MA 01519 (US); Fairchild, Jacob Nathan, Upton, MA 01568 (US); Hill, Jason F., Milford, MA 01757 (US); Wyndham, Kevin Daniel, Upton, MA 01568 (US)
(72) Inventor: BROUSMICHE, Darryl, W., Grafton, MA 01519 (US); FAIRCHILD, Jacob, Nathan, Upton, MA 01568 (US); HILL, Jason, F., Milford, MA 01757 (US); WYNDHAM, Kevin, Daniel, Upton, MA 01568 (US)
(74) Representative: Barton, Matthew Thomas
(86) International application number: PCT/US2016/029803
(87) International publication number: WO 2016/176461

(56) References cited:
- WO-A1-2010/061005
- US-A1- 2010 181 240
- US-A1- 2014 319 057
- US-B1- 6 447 764
- US-B2- 6 946 566

## Description

### BACKGROUND OF THE INVENTION

Packing materials for liquid chromatography (LC) are generally classified into two types: organic materials, *e.g*., polydivinylbenzene, and inorganic materials typified by silica. Many organic materials are chemically stable against strongly alkaline and strongly acidic mobile phases, allowing flexibility in the choice of mobile phase pH. However, organic chromatographic materials generally result in columns with low efficiency, particularly with low molecular-weight analytes. Many organic chromatographic materials not only lack the mechanical strength of typical chromatographic silica but also shrink and swell when the composition of the mobile phase is changed.

Silica is the material most widely used in High Performance Liquid Chromatography (HPLC), Ultra High Performance Liquid Chromatography (UHPLC), and Supercritical Fluid Chromatography (SFC). The most common applications employ silica that has been surface-derivatized with an organic functional group such as octadecyl (C18), octyl (C8), phenyl, amino, cyano, *etc.* As stationary phases for HPLC, these packing materials result in columns that have high efficiency and do not show evidence of shrinking or swelling.

Current Hybrid Material Technologies (HMT) provide important solutions to traditional chromatographic problems experienced with silica-based packing materials. HMT improvements include dramatically improved high and excellent low pH stability, great mechanical stability, good peak shape when used at pH 7, high efficiency, good retentivity, and desirable chromatographic selectivity.

US 2014/0319057 A1 discloses various high purity hybrid silica chromatographic materials with a surface area of 25 to 1100 m²/g, a micropore area of less than 110 m²/g and an average pore diameter of 2 nm to 150 nm comprising a chromatographic surface, wherein the chromatographic surface comprises an a polar ion-paired bonded moiety. Said materials have been treated with acetic acid, hence the surface groups are considered to be protonated and the form an ion-paired bonded moiety with an acetate counterion.

However, two problems have been noted for some HMT and silica materials. The first is poor peak shape for bases when used at low pH and low ionic strength, which can negatively impact loadability and peak capacity when used at low pH under these conditions.

A second problem observed for many HMT and silica materials is a change in acidic and basic analyte retention times (denoted 'drift') after a column is exposed to repeated changes in mobile phase pH (*e.g.*, switching repeatedly from pH 10 to 3).

Similarly, methoxylation of silanols over time results in reduced polarity of the stationary phase. As a result, significant drift can be seen as overall retention decreases over time.

Thus, there remains a need for alternative materials that provide superior peak shape and reduced drift.

### SUMMARY OF THE INVENTION

The present invention provides novel chromatographic materials, *e*.*g*., for chromatographic separations.

In particular, the invention provides improved improved peak shape through the inclusion of an ion-paired group which acts, in essence, as permanent charge, positive or negative. In other words, the stationary phase material is "pre-ionized" leading to an increase in polar interactions between the "permanently" charged selector and the the analytes. Changes to the silica surface over time, through methoxylation or other means, have a significantly lesser impact, due to the more dominant interaction with the positively charged basic selelctors. As a result, the stationary phases of the invention are able to provide reduced drift, increased retention, and adjustable peak shape for bases, especially with higher counterion levels.

In one aspect, the invention provides a high purity chromatographic material according to claim 1.

In certain embodiments of the high purity chromatographic material, the chromatographic surface further comprises covalently-bonded surface groups.

In orther embodiments of the high purity chromatographic material, the ion-paired bonded moiety is polar.

In another embodiment, the high purity chromatographic material comprises two or more polar ion-paired bonded moieties. In certain embodiments, the ion-paired bonded moieties form a zwitterionic pair such that a positive and negatively charged moiety without a coutnerion is provided such that the net charge on the surface of the material is neutral.

In some embodiments, the basic surface group comprises pyridinyl moiety. In other embodiments, the basic surface group comprises a 2-pyridinyl-ethylene moiety. In still other embodiments, the basic surface group comprises a moiety of one of the following structures: 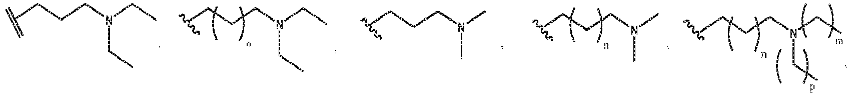 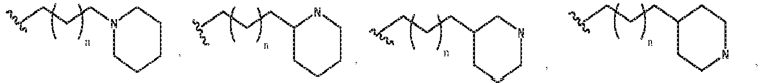 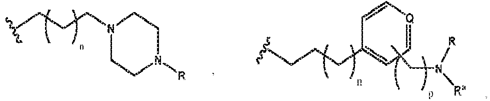 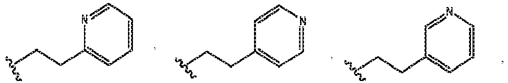 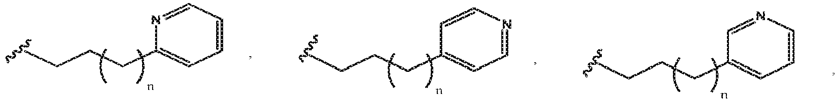 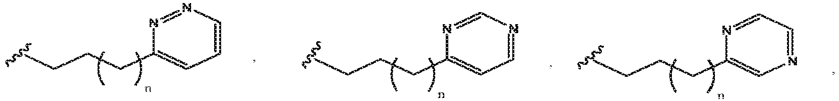 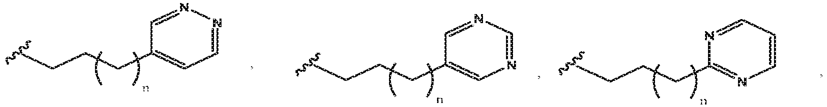 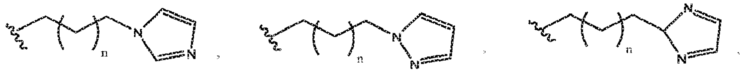 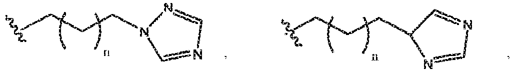 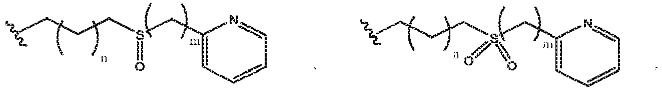 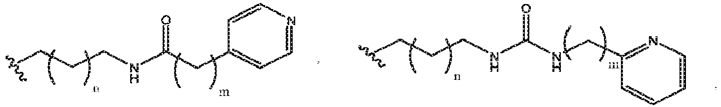 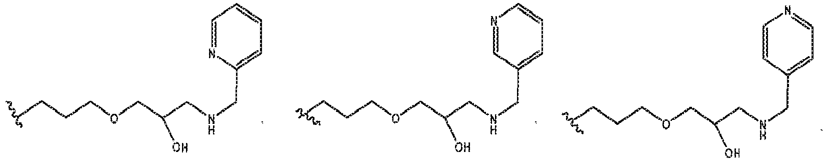 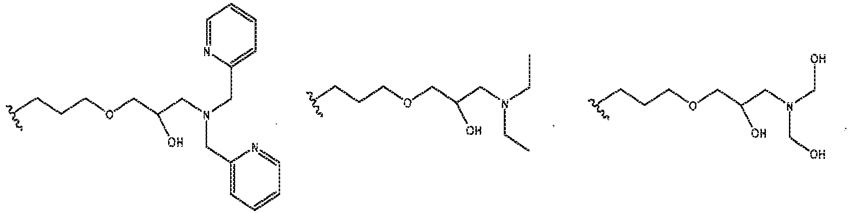 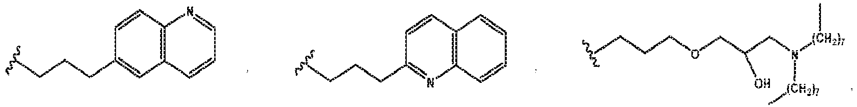 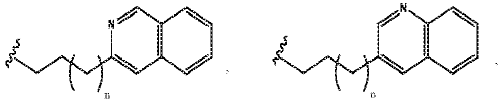 wherein
each instance of m, n, and p is independently an integer from 0 to 18; and each instance of R and R^{a} is independently alkyl, alkenyl, alkynyl, aryl, cyano, amino, diol, nitro, ester, cation or anion exchange groups, an alkyl or aryl group containing an embedded polar functionalities or chiral moieties.

In some embodiments, the acidic counterion is a paratoluene sulfonic acid counterion.

In certain embodiments, the percentage of the ion-pair forming surface groups converted to ion-paired bonded moieties is from 1% to 100%; from 10% to 100%; or from 25% to 100%.

In certain embodiments, the ratio of the covalently-bonded surface group : ion-paired moiety is from about 1:350 to about 350:1; from about 1:200 to about 200:1; or from about 1:35 to about 35:1; 1:4 to about 4:1; 1:3 to about 3:1.

In certain embodiments, the ratio of the covalently-bonded surface group : ion-pair forming surface groups is from 1:350 to about 350:1; from about 1:200 to about 200:1; or from about 1:35 to about 35:1; 1:4 to about 4:1; 1:3 to about 3:1.

In other embodiments, the concentration of ion-paired moiety is less than about 10 µmol/m²; less than about 2 µmol/m²; or less than about 0.5 µmol/m².

In still other embodiments, the concentration of ion-paired moiety is from about 0.01 µmol/m² to about 10 µmol/m²; from about 0.25 µmol/m² to about 5 µmol/m²; or from about 0.5 µmol/m² to about 2 µmol/m².

In still other embodiments, the covalently-bonded surface group is a C4 to C30 bonded phase, an aromatic, a phenylalkyl, a fluoro-aromatic, a phenylhexyl, a pentafluorophenylalkyl, or a chiral bonded phase. In particular embodiments, the covalently-bonded surface group is a C18 bonded phase. In other particular embodiments, the covalently-bonded surface group is an embedded polar bonded phase.

In certain embodiments, the high purity chromatographic material further comprising a chromatographic core material. In some embodiments, the chromatographic core is a silica material; a hybrid inorganic/organic material; a superficially porous material; an inorganic material with a hybrid surface layer, a hybrid material with an inorganic surface layer, or a hybrid material with a different hybrid surface layer.

In certain embodiments, the high purity chromatographic material is in the form of a particle. In other embodiments, the high purity chromatographic material is in the form of a monolith. In still other embodiments, the high purity chromatographic material is in the form of a superficially porous material.

In some embodiments, the high purity chromatographic material 1 does not have chromatographically enhancing pore geometry. In other embodiments, the high purity chromatographic material has chromatographically enhancing pore geometry.

In particular embodiments, the high purity chromatographic material has a surface area of about 25 to 1100 m²/g; of about 80 to 500 m²/g; or of about 120 to 330 m²/g.

In still other embodiments, the high purity chromatographic material has a pore volume of about 0.15 to 1.7 cm³/g; of about 0.5 to 1.3 cm^{3/}g; or of less than about 110 m²/g.

In other embodiments, the high purity chromatographic material has a micropore surface area of less than about 105 m2/g; of less than about 80 m²/g; or of less than about 50 m²/g.

In yet other embodiments, the high purity chromatographic material has an average pore diameter of about 20 to 1500Å; of about 50 to 1000Å; of about 100 to 750Å; or of about 110 to 500Å.

In particular embodiments, the high purity chromatographic material is hydrolytically stable at a pH of about 1 to about 14; at a pH of about 10 to about 14; or at a pH of about 1 to about 5.

In certain embodiments, the high purity chromatographic material has been surface modified. In particular embodiments, the high purity chromatographic material has been surface modified by coating with a polymer. In other embodiments, the high purity chromatographic material has been surface modified by coating with a polymer by a combination of organic group and silanol group modification. In still other embodiments, the high purity chromatographic material has been surface modified by a combination of organic group modification and coating with a polymer. In yet other emboduiments, the high purity chromatographic material has been surface modified by a combination of silanol group modification and coating with a polymer. IN still yet other embodiments, the high purity chromatographic material has been surface modified via formation of an organic covalent bond between the material's organic group and the modifying reagent. In further embodiments, the high purity chromatographic material has been surface modified by a combination of organic group modification, silanol group modification and coating with a polymer.

In some embodiments, the high purity chromatographic material further comprises a nanoparticle or a mixture of more than one nanoparticle dispersed within the material. In certain embodiments, the nanoparticle is present in <20% by weight of the nanocomposite; or in <5% by weight of the nanocomposite. In other embodiments, the nanoparticle is crystalline or amorphous. In particular embodiments, the nanoparticle is a substance which comprises one or more moieties selected from the group consisting of silicon carbide, aluminum, diamond, cerium, carbon black, carbon nanotubes, zirconium, barium, cerium, cobalt, copper, europium, gadolinium, iron, nickel, samarium, silicon, silver, titanium, zinc, boron, oxides thereof, and nitrides thereof. In still other embodiments, the nanoparticle is a substance which comprises one or more moieties selected from the group consisting of nano-diamonds, silicon carbide, titanium dioxide, cubic-boronitride. In certain embodiments, the nanoparticles are less than or equal to 200 nm in diameter; less than or equal to 100 nm in diameter; less than or equal to 50 nm in diameter or less than or equal to 20 nm in diameter.

In another aspect, the present disclosure provides a method for preparing a high purity chromatographic material comprising the steps of
a. providing a chromatographic material having free-silanol surface groups
b. reacting the silanol surface groups with a covalently-bonded surface modifying group to obtain a bonded material; and
c. reacting the resultant bonded material with an ion-pairing reagent;
to produce a high purity chromatographic material having ion-paired bound surface moieties.

In certain embodiments of the method, the covalently-bonded surface modifying group is a basic surface modifying group. In particular embodiments, the covalently-bonded surface modifying group is a nitrogen containing surface modifying group. In other embodiments, the covalently-bonded surface modifying group is selected from: 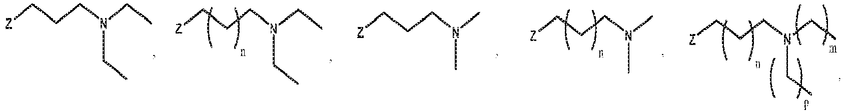 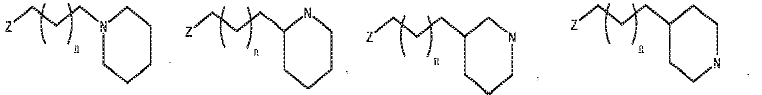 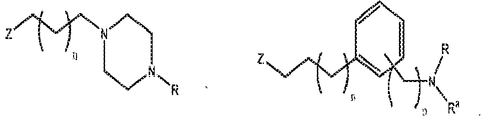 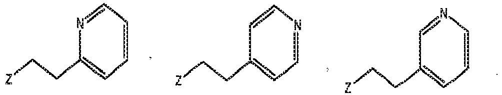 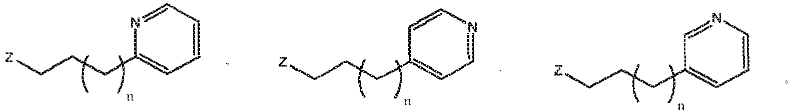 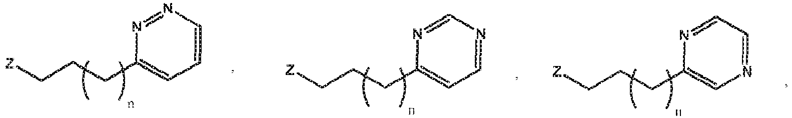 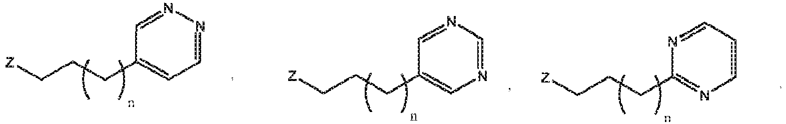 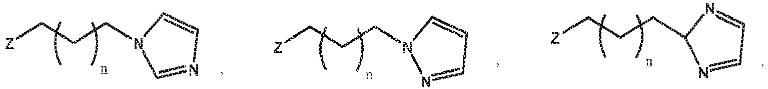 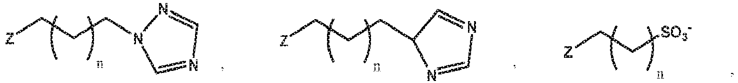 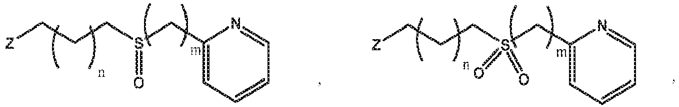 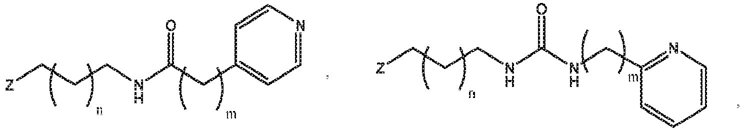 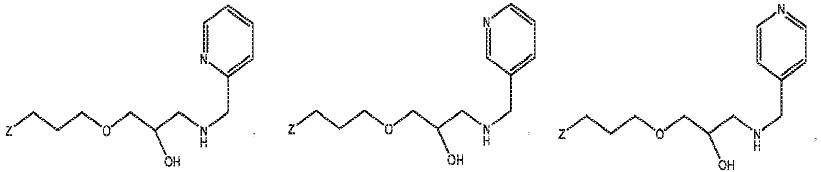 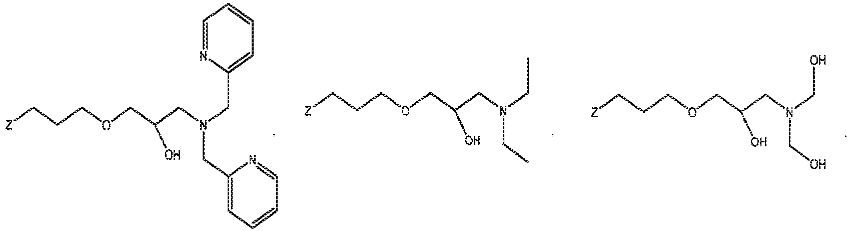 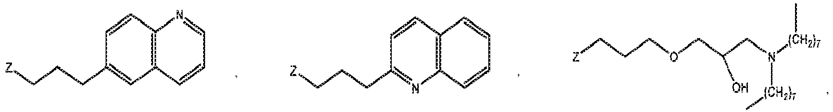 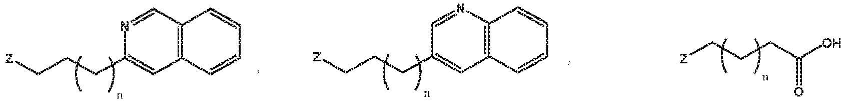 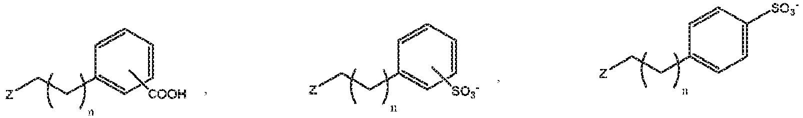 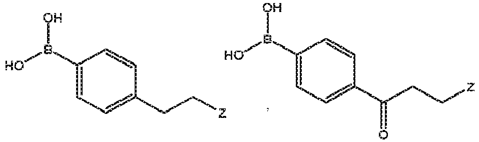 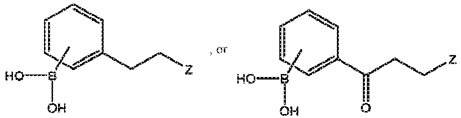 wherein:
each instance of m, n, and p is independently an integer from 0 to 18;
each instance of R and R^{a} is independently alkyl, alkenyl, alkynyl, aryl, cyano, amino, diol, nitro, ester, cation or anion exchange groups, an alkyl or aryl group containing an embedded polar functionalities or chiral moieties;
Z represents a chemically reactive group, including (but not limited to) 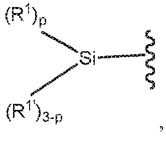 -OH, -OR⁶, amine, alkylamine, dialkylamine, isocyanate, acyl chloride, triflate, isocyanate, thiocyanate, imidazole carbonate, NHS-ester, carboxylic acid, ester, epoxide, alkyne, alkene, azide, -Br, -Cl, or -I;
each occurrence of R¹ independently represents a chemically reactive group on silicon, including (but not limited to) -H, -OH, -OR⁶, dialkylamine, triflate, Br, Cl, I, vinyl, alkene, or - (CH₂)m"Q;
each occurrence of Q is -OH, -OR⁶, amine, alkylamine, dialkylamine, isocyanate, acyl chloride, triflate, isocyanate, thiocyanate, imidazole carbonate, NHS-ester, carboxylic acid, ester, epoxide, alkyne, alkene, azide, -Br, -Cl, or -I;
m" is an integer from 1-8
p is an integer from 1-3;
each occurrence of R^{1'} independently represents F, C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl, fluoroalkyl, or fluoroaryl; and
each occurrence of R⁶ independently represents C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl.

In other embodiments of the method, the ion-pairing reagent is acidic. In particular embodiments, the ion-pairing reagent is para-toluene sulfonic acid.

In yet other embodiments of the method, the method further comprisses the step of surface modifying the resulting material. In other embodiments of the method of the invention, the method further comprisses subjecting the resulting chromatographic material to hydrothermal treatment.

In another aspect, the i disclosure provides a separations device having a stationary phase comprising the high purity chromatographic material of the invention. In certain embodiments said device is selected from the group consisting of chromatographic columns, thin layer plates, filtration membranes, microfluidic separation devices, sample cleanup devices, solid supports, microchip separation devices, and microtiter plates. In other embodiments, the separations device is useful for applications selected from the group consisting of solid phase extraction, high pressure liquid chromatography, combinatorial chemistry, synthesis, biological assays, ultra performance liquid chromatography, ultra fast liquid chromatography, ultra high pressure liquid chromatography, supercritical fluid chromatography, and mass spectrometry. In particular embodiments, the separations device is useful for supercritical fluid chromatography.

In yet another aspect, the disclosure provides a chromatographic column, comprising
a) a column having a cylindrical interior for accepting a packing material and
b) a packed chromatographic bed comprising The high purity chromatographic material of the invention.

In still another aspect, the disclosure provides a kit comprising the high purity chromatographic material of the invention, and instructions for use. In some embodiments, the instructions are for use with a separations device. In certain embodiments, the separations device is selected from the group consisting of chromatographic columns, thin layer plates, microfluidic separation devices, filtration membranes, sample cleanup devices and microtiter plates. In a particular embodiment, the separations device is useful for supercritical fluid chromatography.

In another aspect, the disclosure provides a chromatographic device, comprising
a) an interior channel for accepting a packing material and
b) a packed chromatographic bed comprising The high purity chromatographic material of the invention.

In still another aspect, the disclosure provides a method for separating a sample using supercritical fluid chromatography comprising:
a.) providing a sample to be separated;
b.) providing a high purity chromatographic material of the invention;
c.) separating the sample using the high purity chromatographic material under supercritical fluid conditions.

### BRIEF DESCRIPTION OF THE DRAWINGS

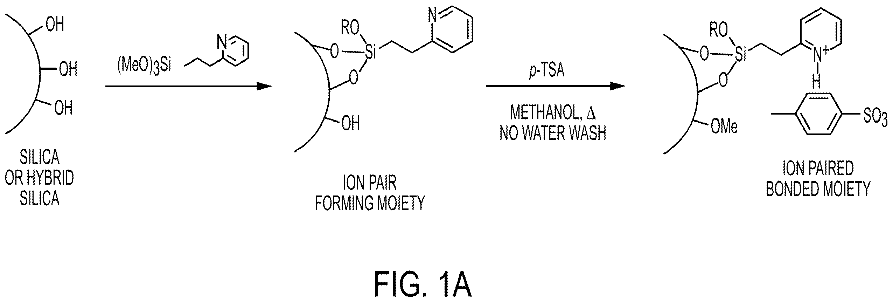

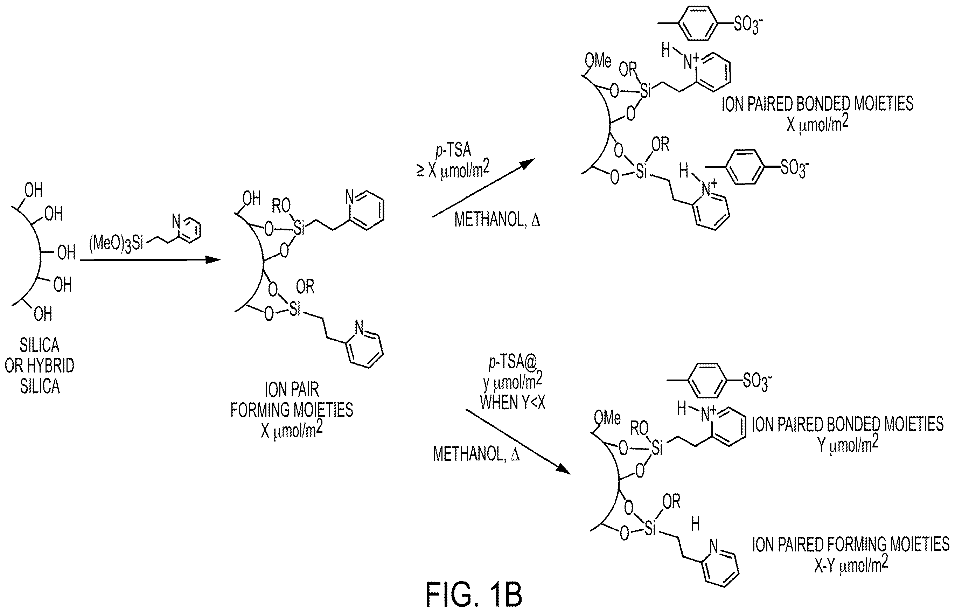

**Figures 1a** **and** **1b** depict reaction of an ion-pair forming moiety on the bonded phase to prepare an ion-paired bound moiety in a representative material of the invention.
**Figure 2** depicts the peak shape of analytes using a non-ion paired material, an ion paired material having 0.5 µmol/m² counterion, and an ion paired material having 2.0 µmol/m² counterion.

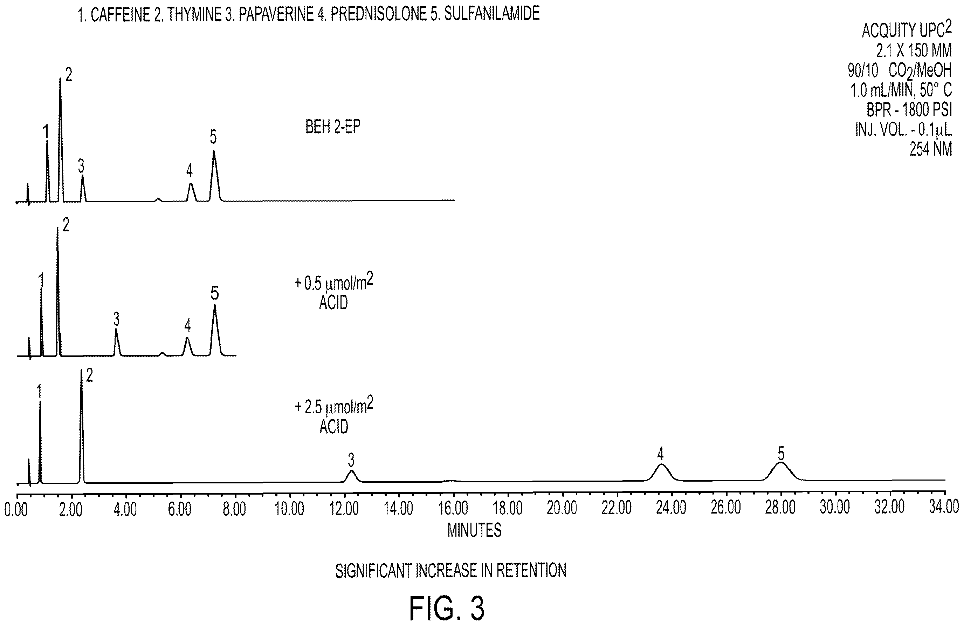

**Figure 3** depicts the retention times of analytes using a non-ion paired material, an ion paired material having 0.5 µmol/m² counterion, and an ion paired material having 2.0 µmol/m² counterion.
**Figure 4** depicts the retention times of analytes using a non-ion paired material, an ion paired material having 0.5 µmol/m² counterion, and an ion paired material having 2.5 µmol/m² counterion - 1 day after ion-pairing treatment and 3 days after ion-pairing treatment.

### DETAILED DESCRIPTION OF THE INVENTION

The present invention provides novel chromatographic materials, *e.g.,* for chromatographic separations. The present invention will be more fully illustrated by reference to the definitions set forth belows.

### Definitions

"High Purity" or "high purity chromatographic material" includes a material which is prepared form high purity precursors. In certain aspects, high purity materials have reduced metal contamination and/or non-diminished chromatographic properties including, but not limited to, the acidity of surface silanols and the heterogeneity of the surface.

"Chromatographic surface" includes a surface which provides for chromatographic separation of a sample. In certain aspects, the chromatographic surface is porous. In some aspects, a chromatographic surface may be the surface of a particle, a superficially porous material or a monolith. In certain aspects, the chromatographic surface is composed of the surface of one or more particles, superficially porous materials or monoliths used in combination during a chromatographic separation. In certain other aspects, the chromatographic surface is non-porous.

"Ion-pair-forming surface group" includes a functional group which bears an electron donating or electron withdrawing group. In certain aspects, the ion-pair-forming moiety contains one or more carboxylic acid groups, amino groups, imido groups, amido groups, pyridyl groups, imidazolyl groups, ureido groups, thionyl-ureido groups or aminosilane groups, or a combination thereof. In other aspects, the ion-pair-forming moiety contains a group bearing a nitrogen or phosphorous atom having a free electron lone pair. In certain aspects, the ion-pair-forming moiety is covalently attached to the material surface and has an ionizable group. In some instances the ion-pair-forming moiety is attached to the chromatographic material by chemical modification of a surface hybrid group.

As used herein, the term "ion-paired bound moiety" represents a functional group which bears an ion-pair such that the net charge of the moiety is zero. In certain aspects, the ion-paired bound moiety is formed by ionization of an ion-pair forming surface groups on the surface of the chromatographic material. In certain aspects, the ion-paired bound moiety is formed by reaction with an acid. In other aspects, the ion-paired bound moiety is formed by reaction with a base.

"Covalently-bonded surface group" includes a surface group on the chromatographic surface which exhibits covalent bonding. In certain aspects, a covalently-bonded group can be a carbon bonded phase such as a C4 to C18 bonded phase. In other aspects, a covalently-bonded surface group can contain an embedded polar group such that the external portion of the covalently-bonded surface maintains covalently-bondedity. In some instances it is a attached to the chromatographic material by chemical modification of a surface hybrid group. In other instances the covalently-bonded group can be C4-C30, embedded polar, chiral, phenylalkyl, or pentafluorophenyl bonding and coatings.

"Chromatographic core" includes a chromatographic materials, including but not limited to an inorganic material such as silica or a hybrid material, as defined herein, in the form of a particle, a monolith or another suitable structure which forms an internal portion of the materials of the invention. In certain aspects, the surface of the chromatographic core represents the chromatographic surface, as defined herein, or represents a material encased by a chromatographic surface, as defined herein. The chromatographic surface material may be disposed on or bonded to or annealed to the chromatographic core in such a way that a discrete or distinct transition is discernable or may be bound to the chromatographic core in such a way as to blend with the surface of the chromatographic core resulting in a gradation of materials and no discrete internal core surface. In certain embodiments, the chromatographic surface material may be the same or different from the material of the chromatographic core and may exhibit different physical or physiochemical properties from the chromatographic core, including, but not limited to, pore volume, surface area, average pore diameter, carbon content or hydrolytic pH stability

"Hybrid", including "hybrid inorganic/organic material," includes inorganic-based structures wherein an organic functionality is integral to both the internal or "skeletal" inorganic structure as well as the hybrid material surface. The inorganic portion of the hybrid material may be, *e*.*g*., alumina, silica, titanium, cerium, or zirconium or oxides thereof, or ceramic material. "Hybrid" includes inorganic-based structures wherein an organic functionality is integral to both the internal or "skeletal" inorganic structure as well as the hybrid material surface. As noted above, exemplary hybrid materials are shown in U.S. Patent Nos. 4,017,528, 6,528,167, 6,686,035 and 7,175,913.

The term "alicyclic group" includes closed ring structures of three or more carbon atoms. Alicyclic groups include cycloparaffins or naphthenes which are saturated cyclic hydrocarbons, cycloolefins, which are unsaturated with two or more double bonds, and cycloacetylenes which have a triple bond. They do not include aromatic groups. Examples of cycloparaffins include cyclopropane, cyclohexane and cyclopentane. Examples of cycloolefins include cyclopentadiene and cyclooctatetraene. Alicyclic groups also include fused ring structures and substituted alicyclic groups such as alkyl substituted alicyclic groups. In the instance of the alicyclics such substituents can further comprise a lower alkyl, a lower alkenyl, a lower alkoxy, a lower alkylthio, a lower alkylamino, a lower alkylcarboxyl, a nitro, a hydroxyl, -CF3, -CN, or the like.

The term "aliphatic group" includes organic compounds characterized by straight or branched chains, typically having between 1 and 22 carbon atoms. Aliphatic groups include alkyl groups, alkenyl groups and alkynyl groups. In complex structures, the chains can be branched or cross-linked. Alkyl groups include saturated hydrocarbons having one or more carbon atoms, including straight-chain alkyl groups and branched-chain alkyl groups. Such hydrocarbon moieties may be substituted on one or more carbons with, for example, a halogen, a hydroxyl, a thiol, an amino, an alkoxy, an alkylcarboxy, an alkylthio, or a nitro group. Unless the number of carbons is otherwise specified, "lower aliphatic" as used herein means an aliphatic group, as defined above (*e*.*g*., lower alky), lower alkenyl, lower alkynyl), but having from one to six carbon atoms. Representative of such lower aliphatic groups, *e.g*., lower alkyl groups, are methyl, ethyl, n-propyl, isopropyl, 2-chloropropyl, n-butyl, sec-butyl, 2-aminobutyl, isobutyl, tert-butyl, 3-thiopentyl and the like. As used herein, the term "nitro" means -NO2; the term "halogen" designates -F, -Cl. -Br or -I; the term "thiol" means SH; and the term "hydroxyl" means -OH. Thus, the term "alkylamino" as used herein means an alkyl group, as defined above, having an amino group attached thereto. Suitable alkylamino groups include groups having 1 to about 12 carbon atoms, preferably from 1 to about 6 carbon atoms. The term "alkylthio" refers to an alkyl group, as defined above, having a sulfhydryl group attached thereto. Suitable alkylthio groups include groups having 1 to about 12 carbon atoms, preferably from 1 to about 6 carbon atoms. The term "alkylcarboxyl" as used herein means an alkyl group, as defined above, having a carboxyl group attached thereto. The term "alkoxy" as used herein means an alkyl group, as defined above, having an oxygen atom attached thereto. Representative alkoxy groups include groups having 1 to about 12 carbon atoms, preferably 1 to about 6 carbon atoms, *e*.*g*., methoxy, ethoxy, propoxy, tert-butoxy and the like. The terms "alkenyl" and "alkynyl" refer to unsaturated aliphatic groups analogous to alkyls, but which contain at least one double or triple bond respectively. Suitable alkenyl and alkynyl groups include groups having 2 to about 12 carbon atoms, preferably from 1 to about 6 carbon atoms.

The term "alkyl" includes saturated aliphatic groups, including straight-chain alkyl groups, branched-chain alkyl groups, cycloalkyl (alicyclic) groups, alkyl substituted cycloalkyl groups and cycloalkyl substituted alkyl groups. In certain embodiments, a straight chain or branched chain alkyl has 30 or fewer carbon atoms in its backbone, *e*.*g*., C1-C30 for straight chain or C3-C30 for branched chain. In certain embodiments, a straight chain or branched chain alkyl has 20 or fewer carbon atoms in its backbone , *e*.*g*., C1-C20 for straight chain or C3-C20 for branched chain, and more preferably 18 or fewer. Likewise, preferred cycloalkyls have from 4-10 carbon atoms in their ring structure and more preferably have 4-7 carbon atoms in the ring structure. The term "lower alkyl" refers to alkyl groups having from 1 to 6 carbons in the chain and to cycloalkyls having from 3 to 6 carbons in the ring structure.

Moreover, the term "alkyl" (including "lower alkyl") as used throughout the specification and Claims includes both "unsubstituted alkyls" and "substituted alkyls", the latter of which refers to alkyl moieties having substituents replacing a hydrogen on one or more carbons of the hydrocarbon backbone. Such substituents can include, for example, halogen, hydroxyl, alkylcarbonyloxy, arylcarbonyloxy, alkoxycarbonyloxy, aryloxycarbonyloxy, carboxylate, alkylcarbonyl, alkoxycarbonyl, aminocarbonyl, alkylthiocarbonyl, alkoxyl, phosphate, phosphonato, phosphinato, cyano, amino (including alkyl amino, dialkylamino, arylamino, diarylamino and alkylarylamino), acylamino (including alkylcarbonylamino, arylcarbonylamino, carbamoyl and ureido), amidino, imino, sulfhydryl, alkylthio, arylthio, thiocarboxylate, sulfate, sulfonato, sulfamoyl, sulfonamido, nitro, trifluoromethyl, cyano, azido, heterocyclyl, aralkyl, or an aromatic or heteroaromatic moiety. It will be understood by those skilled in the art that the moieties substituted on the hydrocarbon chain can themselves be substituted, if appropriate. Cycloalkyls can be further substituted, *e.g*., with the substituents described above. An "aralkyl" moiety is an alkyl substituted with an aryl, *e*.*g*., having 1 to 3 separate or fused rings and from 6 to about 18 carbon ring atoms, *e*.*g*., phenylmethyl (benzyl).

The term "amino," as used herein, refers to an unsubstituted or substituted moiety of the formula -NRaRb, in which Ra and Rb are each independently hydrogen, alkyl, aryl, or heterocyclyl, or Ra and Rb, taken together with the nitrogen atom to which they are attached, form a cyclic moiety having from 3 to 8 atoms in the ring. Thus, the term "amino" includes cyclic amino moieties such as piperidinyl or pyrrolidinyl groups, unless otherwise stated. An "amino-substituted amino group" refers to an amino group in which at least one of Ra and Rb, is further substituted with an amino group.

The term "aromatic group" includes unsaturated cyclic hydrocarbons containing one or more rings. Aromatic groups include 5- and 6-membered single-ring groups which may include from zero to four heteroatoms, for example, benzene, pyrrole, furan, thiophene, imidazole, oxazole, thiazole, triazole, pyrazole, pyridine, pyrazine, pyridazine and pyrimidine and the like. The aromatic ring may be substituted at one or more ring positions with, for example, a halogen, a lower alkyl, a lower alkenyl, a lower alkoxy, a lower alkylthio, a lower alkylamino, a lower alkylcarboxyl, a nitro, a hydroxyl, -CF3, -CN, or the like.

The term "aryl" includes 5- and 6-membered single-ring aromatic groups that may include from zero to four heteroatoms, for example, unsubstituted or substituted benzene, pyrrole, furan, thiophene, imidazole, oxazole, thiazole, triazole, pyrazole, pyridine, pyrazine, pyridazine and pyrimidine and the like. Aryl groups also include polycyclic fused aromatic groups such as naphthyl, quinolyl, indolyl and the like. The aromatic ring can be substituted at one or more ring positions with such substituents, *e.g*., as described above for alkyl groups. Suitable aryl groups include unsubstituted and substituted phenyl groups. The term "aryloxy" as used herein means an aryl group, as defined above, having an oxygen atom attached thereto. The term "aralkoxy" as used herein means an aralkyl group, as defined above, having an oxygen atom attached thereto. Suitable aralkoxy groups have 1 to 3 separate or fused rings and from 6 to about 18 carbon ring atoms, *e.g.*, O-benzyl.

The term "ceramic precursor" is intended include any compound that results in the formation of a ceramic material.

The term "chiral moiety" is intended to include any functionality that allows for chiral or stereoselective syntheses. Chiral moieties include, but are not limited to, substituent groups having at least one chiral center, natural and unnatural amino-acids, peptides and proteins, derivatized cellulose, macrocyclic antibiotics, cyclodextrins, crown ethers, and metal complexes.

The term "embedded polar functionality" is a functionality that provides an integral polar moiety such that the interaction with basic samples due to shielding of the unreacted silanol groups on the silica surface is reduced. Embedded polar functionalities include, but are not limited to carbonate, amide, urea, ether, thioether, sulfinyl, sulfoxide, sulfonyl, thiourea, thiocarbonate, thiocarbamate, ethylene glycol, heterocyclic, triazole functionalities or carbamate functionalities such as disclosed in U. S. Patent No. 5,374,755, and chiral moieties.

The language "chromatographically-enhancing pore geometry" includes the geometry of the pore configuration of the presently-disclosed materials, which has been found to enhance the chromatographic separation ability of the material, *e*.*g*., as distinguished from other chromatographic media in the art. For example, a geometry can be formed, selected or constructed, and various properties and/or factors can be used to determine whether the chromatographic separations ability of the material has been "enhanced", *e.g*., as compared to a geometry known or conventionally used in the art. Examples of these factors include high separation efficiency, longer column life and high mass transfer properties (as evidenced by, *e.g.,* reduced band spreading and good peak shape.) These properties can be measured or observed using art-recognized techniques. For example, the chromatographically-enhancing pore geometry of the present porous inorganic/organic hybrid materials is distinguished from the prior art materials by the absence of "ink bottle" or "shell shaped" pore geometry or morphology, both of which are undesirable because they, *e*.*g*., reduce mass transfer rates, leading to lower efficiencies.

Chromatographically-enhancing pore geometry is found in hybrid materials containing only a small population of micropores. A small population of micropores is achieved in hybrid materials when all pores of a diameter of about < 34Å contribute less than about 110 m²/g to the specific surface area of the material. Hybrid materials with such a low micropore surface area (MSA) give chromatographic enhancements including high separation efficiency and good mass transfer properties (as evidenced by, *e*.*g*., reduced band spreading and good peak shape). Micropore surface area (MSA) is defined as the surface area in pores with diameters less than or equal to 34Å, determined by multipoint nitrogen sorption analysis from the adsorption leg of the isotherm using the BJH method. As used herein, the acronyms "MSA" and "MPA" are used interchangeably to denote "micropore surface area".

The term "functionalizing group" includes organic functional groups which impart a certain chromatographic functionality to a chromatographic stationary phase.

The term "heterocyclic group" includes closed ring structures in which one or more of the atoms in the ring is an element other than carbon, for example, nitrogen, sulfur, or oxygen. Heterocyclic groups can be saturated or unsaturated and heterocyclic groups such as pyrrole and furan can have aromatic character. They include fused ring structures such as quinoline and isoquinoline. Other examples of heterocyclic groups include pyridine and purine. Heterocyclic groups can also be substituted at one or more constituent atoms with, for example, a halogen, a lower alkyl, a lower alkenyl, a lower alkoxy, a lower alkylthio, a lower alkylamino, a lower alkylcarboxyl, a nitro, a hydroxyl, -CF3, -CN, or the like. Suitable heteroaromatic and heteroalicyclic groups generally will have 1 to 3 separate or fused rings with 3 to about 8 members per ring and one or more N, O or S atoms, e.g. coumarinyl, quinolinyl, pyridyl, pyrazinyl, pyrimidyl, furyl, pyrrolyl, thienyl, thiazolyl, oxazolyl, imidazolyl, indolyl, benzofuranyl, benzothiazolyl, tetrahydrofuranyl, tetrahydropyranyl, piperidinyl, morpholino and pyrrolidinyl.

The term "metal oxide precursor" is intended include any compound that contains a metal and results in the formation of a metal oxide, *e*.*g*., alumina, silica, titanium oxide, zirconium oxide.

The term "monolith" is intended to include a collection of individual particles packed into a bed formation, in which the shape and morphology of the individual particles are maintained. The particles are advantageously packed using a material that binds the particles together. Any number of binding materials that are well known in the art can be used such as, for example, linear or cross-linked polymers of divinylbenzene, methacrylate, urethanes, alkenes, alkynes, amines, amides, isocyanates, or epoxy groups, as well as condensation reactions of organoalkoxysilanes, tetraalkoxysilanes, polyorganoalkoxysiloxanes, polyethoxysiloxanes, and ceramic precursors. In certain embodiments, the term "monolith" also includes hybrid monoliths made by other methods, such as hybrid monoliths detailed in US Patent No. 7,250,214; hybrid monoliths prepared from the condensation of one or more monomers that contain 0-99 mole percent silica (e.g., SiO₂); hybrid monoliths prepared from coalesced porous inorganic/organic particles; hybrid monoliths that have a chromatographically-enhancing pore geometry; hybrid monoliths that do not have a chromatographically-enhancing pore geometry; hybrid monoliths that have ordered pore structure; hybrid monoliths that have non-periodic pore structure; hybrid monoliths that have non-crystalline or amorphous molecular ordering; hybrid monoliths that have crystalline domains or regions; hybrid monoliths with a variety of different macropore and mesopore properties; and hybrid monoliths in a variety of different aspect ratios. In certain embodiments, the term "monolith" also includes inorganic monoliths, such as those described in G. Guiochon / J. Chromatogr. A 1168 (2007) 101-168.

The term "nanoparticle" is a microscopic particle/grain or microscopic member of a powder/nanopowder with at least one dimension less than about 100 nm, *e.g.,* a diameter or particle thickness of less than about 100 nm (0.1 mm), which may be crystalline or noncrystalline. Nanoparticles have properties different from, and often superior to those of conventional bulk materials including, for example, greater strength, hardness, ductility, sinterability, and greater reactivity among others. Considerable scientific study continues to be devoted to determining the properties of nanomaterials, small amounts of which have been synthesized (mainly as nano-size powders) by a number of processes including colloidal precipitation, mechanical grinding, and gas-phase nucleation and growth. Extensive reviews have documented recent developments in nano-phase materials, and are incorporated herein by reference thereto: Gleiter, H. (1989) "Nano-crystalline materials," Prog. Mater. Sci. 33:223-315 and Siegel, R. W. (1993) "Synthesis and properties of nano-phase materials," Mater. Sci. Eng. A168:189-197. In certain embodiments, the nanoparticles comprise oxides or nitrides of the following: silicon carbide, aluminum, diamond, cerium, carbon black, carbon nanotubes, zirconium, barium, cerium, cobalt, copper, europium, gadolinium, iron, nickel, samarium, silicon, silver, titanium, zinc, boron, and mixtures thereof. In certain embodiments, the nanoparticles of the present invention are selected from diamonds, zirconium oxide (amorphous, monoclinic, tetragonal and cubic forms), titanium oxide (amorphous, anatasc, brookite and rutile forms), aluminum (amorphous, alpha, and gamma forms), and boronitride (cubic form). In particular embodiments, the nanoparticles of the present invention are selected from nano-diamonds, silicon carbide, titanium dioxide (anatase form), cubic-boronitride, and any combination thereof. Moreover, in particular embodiments, the nanoparticles may be crystalline or amorphous. In particular embodiments, the nanoparticles are less than or equal to 100 mm in diameter, *e*.*g*., less than or equal to 50 mm in diameter, *e.g.,* less than or equal to 20 mm in diameter.

Moreover, it should be understood that the nanoparticles that are characterized as dispersed within the composites of the invention are intended to describe exogenously added nanoparticles. This is in contrast to nanoparticles, or formations containing significant similarity with putative nanoparticles, that are capable of formation in situ, wherein, for example, macromolecular structures, such as particles, may comprise an aggregation of these endogenously created.

The term "substantially disordered" refers to a lack of pore ordering based on x-ray powder diffraction analysis. Specifically, "substantially disordered" is defined by the lack of a peak at a diffraction angle that corresponds to a d value (or d-spacing) of at least 1 nm in an x-ray diffraction pattern.

"Surface modifiers" include (typically) organic functional groups which impart a certain chromatographic functionality to a chromatographic stationary phase. The porous inorganic/organic hybrid materials possess both organic groups and silanol groups which may additionally be substituted or derivatized with a surface modifier.

The language "surface modified" is used herein to describe the composite material of the present invention that possess both organic groups and silanol groups which may additionally be substituted or derivatized with a surface modifier. "Surface modifiers" include (typically) organic functional groups which impart a certain chromatographic functionality to a chromatographic stationary phase. Surface modifiers such as disclosed herein are attached to the base material, *e.g*., via derivatization or coating and later crosslinking, imparting the chemical character of the surface modifier to the base material. In one embodiment, the organic groups of a hybrid material, react to form an organic covalent bond with a surface modifier. The modifiers can form an organic covalent bond to the material's organic group via a number of mechanisms well known in organic and polymer chemistry including but not limited to nucleophilic, electrophilic, cycloaddition, free-radical, carbene, nitrene, and carbocation reactions. Organic covalent bonds are defined to involve the formation of a covalent bond between the common elements of organic chemistry including but not limited to hydrogen, boron, carbon, nitrogen, oxygen, silicon, phosphorus, sulfur, and the halogens. In addition, carbon-silicon and carbon-oxygen-silicon bonds are defined as organic covalent bonds, whereas silicon-oxygen-silicon bonds that are not defined as organic covalent bonds. A variety of synthetic transformations are well known in the literature, *see*, *e.g.*, March, J. Advanced Organic Chemistry, 3rd Edition, Wiley, New York, 1985*.*

The term "macromolecule" includes polymers, *e.g.,* oligomers, such as, *e*.*g*., DNA, RNA, proteins, lipids and polysaccharides, but excludes small organic molecules (typically having molecular weights of 500 Da or less). Exemplary macromolecules include peptides, phopshopeptides, polypeptides, glycopeptides, proteins, glycoproteins, antibodies, phosphoproteins, nucleic acids, oligonucletoides, polynucelotides, phospholipids, synthetic or natural polymers and mixtures thereof. In certain embodiments, the macromolecule is not an insulin or a derivative thereof. In certain other embodiments, the protiens are enzymes, hormones, transport proteins, immunoglobulin or antibodies, structural proteins, motor proteins, receptor proteins, signalling proteins, storage proteins, or mixtures thereof.

The term "functionalized macromolecule" includes macromolecules having functional groups. Functionalized macromolecules are often referred to as "analytes of interest' in a variety of scientific, biochemical and clinical scenarios.

The term "functional group" refers to a specific structure of one or more atoms that is responsible for the chemical morphological, physiological, biochemical, or environmental behavior of a compound. One or more atoms, *e*.*g*., carbon and/or hydrogen atoms, of a macromolecule can be substituted with a functional group to yield a functionalized macromolecule. Thus, functionalized macromolecules accordingly have functional groups including, *e*.*g*., amines, carboxylic acids, phosphonates, sulfonates, sialylates, *etc.* Exemplary functionalized macromolecules in accordance with the invention include compounds containing highly acidic side chains or include a phosphate group, a sulfonate group, or a sialylate group.

Functionalized macromolecules according to the invention have functional groups that are distinct from other compounds found in a sample, *e.g.,* a biological sample. For example, in a sample comprising phosphopeptides and natural peptides, the functionalized macromolecules are the phosphopeptides. Further examples of functionalized macromolecules include, but are not limited to, phosphopeptides, sialylated glycopeptides, sulfonated peptides, sulfonated peptides, sulfonated glycopeptides, phospho-oligonucleotides, and phospholipids. In certain embodiments, functionalized macromolecules include macromolecules having one or more isotopic labels. In certain other embodiments, the peptides or proteins are functionalized by myristoylation, palmitoylation, isoprenylation, farnesylation, geranylgeranylation, glypiation, glycosylphosphatidylinositol, lipoylation, flavin moiety attachment, heme attachment, phosphopantetheinylation, diphthamide formation, ethanolamine phosphoglycerol attachment, hypusine formation, acylation, acetylation, formylation, alkylation, methylation, amide bond formation, amino acid addition, arginylation, polyglutamylation, polyglycylation, butyrylation, carboxylation, glycosylation, glycation, polysialylation, malonylation, demethylation, hydroxylation, iodination, ribosylation, oxidation, phosphate ester, phosphoramidate formation, phosphorylation, adenylylation, propionylation, pyroglutamate formation, glutathionylation, nitrosylation, succinylation, sulfation, selenoylation, biotinylation, pegylation, ISGylation, SUMOylation, ubiquitination, Neddylation, Pupylation, citrullination, deimination, deamidation, eliminylation, dehydration, epoxidation, carbamylation, disulfide bridge formation, proteolytic cleavage, racemization, Click-group attachment, Michael addition attachment, Schiff base formation, or a mixture thereof.

The term "mother sample" includes any sample including one or more macromolecules, including, but not limited to, a sample derived from a biological fluid selected from the group consisting of blood, urine, spinal fluid, synovial fluid, sputum, semen, saliva, tears, gastric juices and extracts and/or dilutions/solutions thereof, which is subjected to chromatographic or other separation means prior to obtain a sample for isolation, separation, purification, or detection by the materials and methods of the invention.

The term "Chromatographic separations device" includes any device capable of performing a chromatographic separation, including, but not limited to, a chromatographic column, a thin layer plate, a filtration membrane, a microfluidic separation device, a sample cleanup device, a solid support, a solid phase extraction device, a microchip separation device, and a microtiter plate..

The term "secondary chromatographic separations means" includes chromatographic separations devices and chromatographic materials comprised by chromatographic separation devices. In certain embodiments, a secondary chromatographic separations means is a separate or additional chromatographic separation device than the chromatographic separations device utilized in the methods of the invention. In other embodiments, the secondary chromatographic separations means is a separate or additional chromatographic material housed by the same chromatographic separations device utilized in the methods of the invention.

### Chromatographic Surface materials

The invention provides, a high purity chromatographic material (HPCM) comprising a chromatographic surface wherein the chromatographic surface comprises an ion-paired bound moiety. In certain aspects, the chromatographic surface of the HPCM also comprises covalently-bonded surface groups. In certain aspects, the covalently-bonded surface groups are hydrophobic surface groups.

In certain aspects the HPCM may further comprise a chromatographic core material. In some aspects, the chromatographic core is a silica material; a hybrid inorganic/organic material; a superficially porous material; or a superficially porous particle. The chromatographic core material may be in the form of discreet particles or may be a monolith. The chromatographic core material may be any porous material and may be commercially available or may be produced by known methods, such as those methods described in, for example, in U.S. Patent Nos. 4,017,528, 6,528,167, 6,686,035 and 7,175,913. In some embodiments, the chromatographic core material may be a non-porous core.

In some embodiments, the core material consists essentially of a silica material. Optionally, the core material consists essentially of an organic-inorganic hybrid material or a superficially porous material. In one or more embodiments, the core material consists essentially of an inorganic material with a hybrid surface layer, a hybrid material with an inorganic surface layer, a surrounded hybrid layer, or a hybrid material with a different hybrid surface layer. The stationary phase material can optionally be in the form of a plurality of particles, a monolith, or a superficially porous material. In some embodiments the stationary phase material does not have chromatographically enhancing pore geometry whereas in other embodiments the stationary phase material has chromatographically enhancing pore geometry. The stationary phase material can be in the form of a spherical material, non-spherical material (e.g., including toroids, polyhedron). In certain embodiments, the stationary phase material has a highly spherical core morphology, a rod shaped core morphology, a bent-rod shaped core morphology, a toroid shaped core morphology; or a dumbbell shaped core morphology. In certain embodiments, the stationary phase material has a mixture of highly spherical, rod shaped, bent rod shaped, toroid shaped, or dumbbell shaped morphologies.

The composition of the chromatographic surface material and the chromatographic core material (if present) may be varied by one of ordinary skill in the art to provide enhanced chromatographic selectivity, enhanced column chemical stability, enhanced column efficiency, and/or enhanced mechanical strength. Similarly, the composition of the surrounding material provides a change in hydrophilic/lipophilic balance (HLB), surface charge (*e.g*., isoelectric point or silanol pKa), and/or surface functionality for enhanced chromatographic separation. Furthermore, in some embodiments, the composition of the chromatographic material may also provide a surface functionality for available for further surface modification.

The ion-paired bound moieties and the covalently-bonded surface groups of of the HPCMs of the invention can be prepared using known methods. Some of the reagents used to prepare the ion-paired bound moieties are commercially available. For example silanes having amino alkyl trialkoxysilanes, methyl amino alkyl trialkoxysilanes, and pyridyl alkyl trialkoxysilanes are commercially available. Other silanes such as chloropropyl alkyl trichlorosilane and chloropropyl alkyl trialkoxysilane are also commercially available. These can be bonded and reacted with imidazole to create imidazolyl alkyl silyl surface species, or bonded and reacted with pyridine to create pyridyl alkyl silyl surface species. Other acidic modifiers are also commercially available, including, but not limited to, sulfopropyltrisilanol, carboxyethylsilanetriol, 2-(carbomethoxy)ethylmethyldichlorosilane, 2-(carbomethoxy)ethyltrichlorosilane, 2-(carbomethoxy)ethyltrimethoxysilane, n-(trimethoxysilylpropyl)ethylenediamine, triacetic acid, (2-diethylphosphatoethyl)triethoxysilane, 2-(chlorosulfonylphenyl)emyltrichlorosilane, and 2-(chlorosulfonylphenyl)ethyltrimethoxysilane.

The ion-paired bound moieties result in a quasi-permanent interaction between the basic selector on the silane and an acid or between the acidic selector on the silane and a base. This state only exists due to the lack of water in the system. The chromatograpy can be changed by the addition of water, where the interaction is essentially eliminated. As such, the chromatographic materials of the claimed invention are anhydrous or substantially free of water.

It is known to one skilled in the art to synthesize these types of silanes using common synthetic protocols, including Grinard reactions and hydrosilylations. Products can be purified by chromatography, recrystallization or distillation

Other additives such as isocyanates are also commercially available or can be synthesized by one skilled in the art. A common isocyanate forming protocol is the reaction of a primary amine with phosgene or a reagent known as Triphosgene.

In some embodiments, the ion-paired bound moiety is polar.

In another embodiments, the high purity chromatographic material comprises two or more polar ion-paired bonded moieties. In certain embodiments, the ion-paired bonded moieties form a zwitterionic pair such that a positive and negatively charged moiety without a coutnerion is provided such that the net charge on the surface of the material is neutral.

In certain embodiments, the ion-paired bonded moiety is formed between an ion-pair forming surface group and an acidic counterion. In certain embodiments, the ion paired bonded moiety is formed between a basic ion-pair forming surface group and an acidic counterion. In still other embodiments, the ion-paired bonded moiety is formed between an acidic ion-pair forming surface group and a basic counterion. According to the invention, the basic ion-pair forming surface group is a nitrogen-containing surface group and the acidic counterion is a sulfonic acid counterion.

In particular embodiments, the amount of ion-paired bound-moiety can be adjusted to produce desired peak shapes. Specifially, the ion-paired moiety can be more basic or more acidic to allow for fronting of particular analyst.

In some embodiments the ion-pair forming surface group contains a carboxylic acid group, a sulfonic acid group, a phosphoric acid group, a boronic acid group, an amino group, an imido group, an amido group, a pyridyl group, an imidazolyl group, an ureido group, a thionyl-ureido group or an aminosilane group.

In other aspects the ion-pair forming surface group may be selected from the formulas: 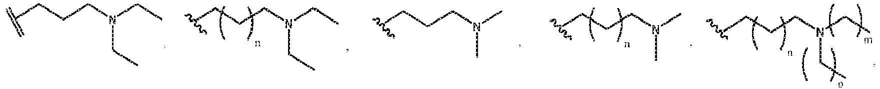 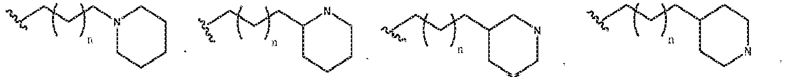 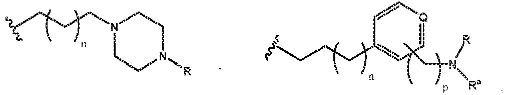 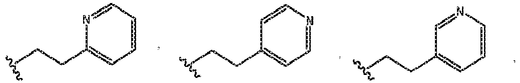 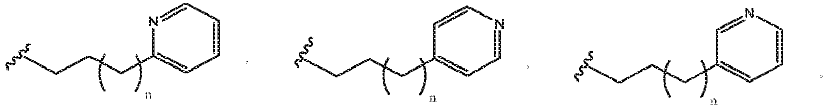 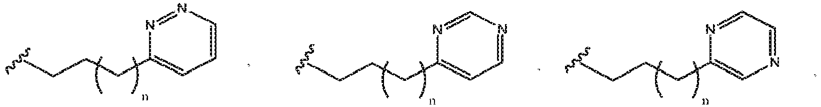 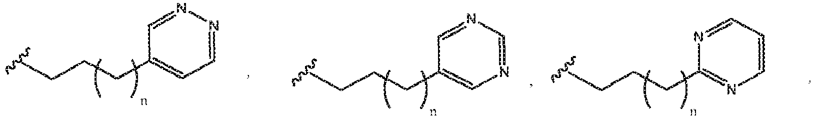 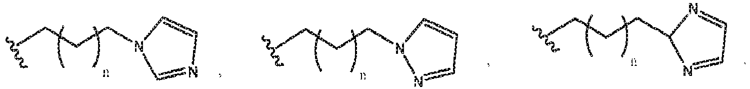 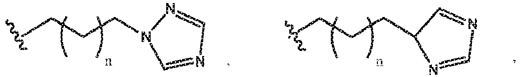 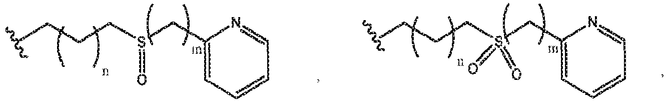 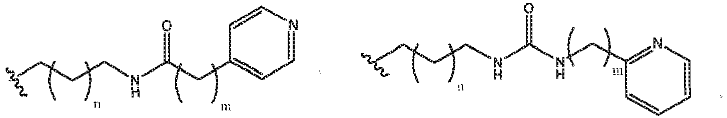 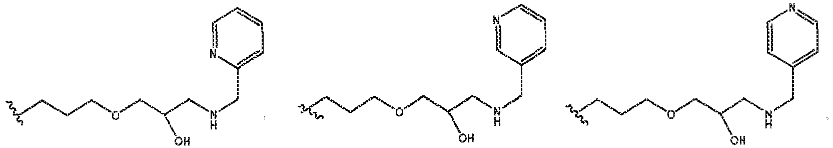 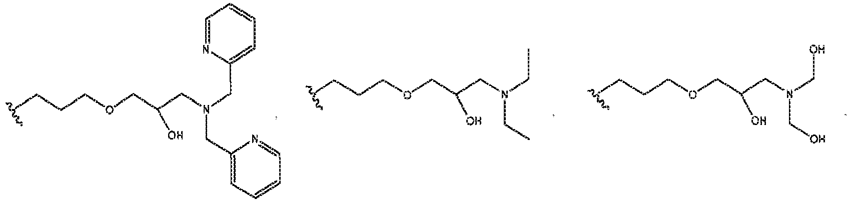 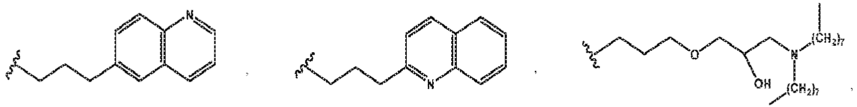 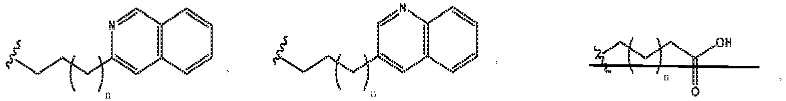 wherein
each instance of m, n, and p is independently an integer from 0 to 18; and each instance of R and R^{a} is independently alkyl, alkenyl, alkynyl, aryl, cyano, amino, diol, nitro, ester, cation or anion exchange groups, an alkyl or aryl group containing an embedded polar functionalities or chiral moieties.

In other aspects, the covalently-bonded / ion-pair forming surface groups can be those described in WO 2013/173494; WO 2013/173501; WO 2011/017418; US 2012-0273404; or U.S. Application Serial No. 13/750,511 filed January 25, 2013.

In certain embodiments, the percentage of the ion-pair forming surface groups converted to ion-paired bonded moieties is from 1% to 100%; from 10% to 100%; or from 25% to 100%.

In certain embodiments, the ratio of the covalently-bonded surface group : ion-paired moiety is from about 2.5:1 to about 350:1; from about 3:1 to about 200:1; or from about 4:1 to about 35:1.

In certain embodiments, the ratio of the covalently-bonded surface group : ion-paired moiety is from about 1:2.5 to about 1:350; from about 1:3 to about 1:200; or from about 1:4 to about 1:35. In certain embodiments, the HPCM of the invention does not comprise any covalently bonded surface group.

In other embodiments, the concentration of ion-paired moiety is less than about 10 µmol/m²; less than about 2 µmol/m²; or less than about 0.5 µmol/m².

In still other embodiments, the concentration of ion-paired moiety is from about 0.01 µmol/m² to about 10 µmol/m²; from about 0.25 µmol/m² to about 5 µmol/m²; or from about 0.5 µmol/m² to about 2 µmol/m².

In still another aspect, the HPCM of the invention has a quantified surface coverage ratio, B/A, from about 2.5 to about 300 wherein A represents the ion-paired bound moiety and B represents the covalently-bonded group. In certain aspects, the quantified surface coverage ratio, B/A, is from about 3 to about 200, from about 4 to about 35 or from about 5 to about 22.

In another aspect, the covalently-bonded surface group of the HPCM of the invention is a C4 to C18 bonded phase. In certain aspects, the covalently-bonded surface group is a C18 bonded phase. In still other aspects, the covalently-bonded surface group is an embedded polar bonded phase. In other aspects, the covalently-bonded surface group is an aromatic, phenylalkyl, fluoro-aromatic, phenylhexyl, or pentafluorophenylalkyl bonded phase. In another aspect, the covalently-bonded surface group is a C₄-C₃₀, embedded polar, chiral, phenylalkyl, or pentafluorophenyl bonding or coating.

In certain embodiments, the HPCM of the invention may be in the form of a particle, a monolith or a superficially porous material. In certain other aspects, the HPCM of the invention is a non-porous material.

In certain aspects, the HPCM of the invention may be an inorganic material (*e*.*g*., silica,), a hybrid organic/inorganic material, an inorganic material (*e.g*., silica) with a hybrid surface layer, a hybrid particle with a inorganic (*e*.*g*., silica) surface layer, or a hybrid particle with a different hybrid surface layer.

In one embodiment, the HPCM of the invention does not have chromatographically enhancing pore geometry. In another embodiment, the HPCM of the invention has chromatographically enhancing pore geometry.

In certain embodiments, the HPCM of the invention has a surface area of about 25 to 1100 m²/g; about 80 to 500 m²/g; or about 120 to 330 m²/g.

In other embodiments, the HPCM of the invention a pore volume of about 0.15 to 1.7 cm³/g; or about 0.5 to 1.3 cm³/g.

In certain other embodiments, the HPCM of the invention is non-porous.

In yet other embodiments, the HPCM of the invention has a micropore surface area of less than about 110 m²/g; less than about 105 m²/g; less than about 80 m²/g; or less than about 50 m²/g.

In still yet other embodiments, the HPCM of the invention has an average pore diameter of about 20 to 1500Å; about 50 to 1000Å; about 100 to 750Å; or about 150 to 500Å.

In another embodiment, the HPCM of the invention is hydrolytically stable at a pH of about 1 to about 14; at a pH of about 10 to about 14; or at a pH of about 1 to about 5.

In another aspect, the invention provides materials as described herein wherein the HPCM material further comprises a nanoparticle or a mixture of more than one nanoparticles dispersed within the chromatographic surface.

In certain embodiments, the nanoparticle is present in <20% by weight of the nanocomposite, <10% by weight of the nanocomposite, or <5% by weight of the nanocomposite.

In other embodiments, the nanoparticle is crystalline or amorphous and may be silicon carbide, aluminum, diamond, cerium, carbon black, carbon nanotubes, zirconium, barium, cerium, cobalt, copper, europium, gadolinium, iron, nickel, samarium, silicon, silver, titanium, zinc, boron, oxides thereof, or a nitride thereof. In particular embodiments, the nanoparticle is a substance which comprises one or more moieties selected from the group consisting of nano-diamonds, silicon carbide, titanium dioxide, and cubic-boronitride.

In other embodiments, the nanoparticles may be less than or equal to 200 nm in diameter, less than or equal to 100 nm in diameter, less than or equal to 50 nm in diameter, or less than or equal to 20 nm in diameter.

### Surface Modification

The HPCM materials of the invention may further be surface modified.

Thus, in one embodiment, the material as described herein may be surface modified with a surface modifier having the formula Zₐ(R')_{b}Si-R", where Z = Cl, Br, I, C₁ - C₅ alkoxy, dialkylamino or trifluoromethanesulfonate; a and b are each an integer from 0 to 3 provided that a + b = 3; R' is a C₁ - C₆ straight, cyclic or branched alkyl group, and R" is a functionalizing group.

In another embodiment, the materials have been surface modified by coating with a polymer.

In certain embodiments, R' is selected from the group consisting of methyl, ethyl, propyl, isopropyl, butyl, t-butyl, sec-butyl, pentyl, isopentyl, hexyl and cyclohexyl. In other embodiments, R' is selected from the group consisting of alkyl, alkenyl, alkynyl, aryl, cyano, amino, diol, nitro, ester, a cation or anion exchange group, an alkyl or aryl group containing an embedded polar functionality and a chiral moiety. In certain embodiments, R' is selected from the group consisting of aromatic, phenylalkyl, fluoroaromatic, phenylhexyl, pentafluorophenylalkyl and chiral moieties.

In one embodiment, R" is a C₁ - C₃₀ alkyl group. In a further embodiment, R" comprises a chiral moiety. In another further embodiment, R" is a C₁ - C₂₀ alkyl group.

In certain embodiments, the surface modifier comprises an embedded polar functionality. In certain embodiments, such embedded polar functionality includes carbonate, amide, urea, ether, thioether, sulfinyl, sulfoxide, sulfonyl, thiourea, thiocarbonate, thiocarbamate, ethylene glycol, heterocyclic, or triazole functionalities. In other embodiments, such embedded polar functionality includes carbamate functionalities such as disclosed in U. S. Patent No. 5,374,755, and chiral moieties. Such groups include those of the general formula 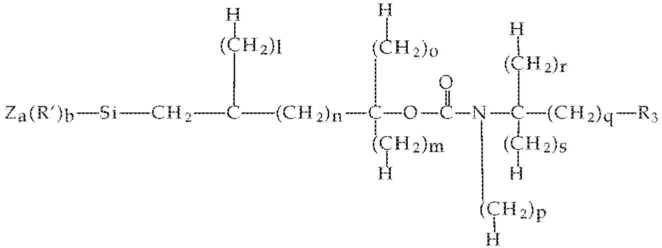 wherein l, m, o, r and s are 0 or 1, n is 0, 1, 2 or 3 p is 0, 1, 2, 3 or 4 and q is an integer from 0 to 19; R₃ is selected from the group consisting of hydrogen, alkyl, cyano and phenyl; and Z, R', a and b are defined as above. Preferably, the carbamate functionality has the general structure indicated below: 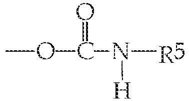 wherein R⁵ may be, *e*.*g*., cyanoalkyl, t-butyl, butyl, octyl, dodecyl, tetradecyl, octadecyl, or benzyl. Advantageously, R⁵ is octyl, dodecyl, or octadecyl.

In certain embodiments, the surface modifier is selected from the group consisting of phenylhexyltrichlorosilane, pentafluorophenylpropyltrichlorosilane, octyltrichlorosilane, octadecyltrichlorosilane, octyldimethylchlorosilane and octadecyldimethylchlorosilane. In some embodiments, the surface modifier is selected from the group consisting of octyltrichlorosilane and octadecyltrichlorosilane. In other embodiments, the surface modifier is selected from the group consisting of an isocyanate or 1,1'-carbonyldiimidazole (particularly when the hybrid group contains a (CH₂)₃OH group).

In another embodiment, the material has been surface modified by a combination of organic group and silanol group modification.

In still another embodiment, the material has been surface modified by a combination of organic group modification and coating with a polymer. In a further embodiment, the organic group comprises a chiral moiety.

In yet another embodiment, the material has been surface modified by a combination of silanol group modification and coating with a polymer.

In other embodiments, the material has been surface modified via formation of an organic covalent bond between the particle's organic group and the modifying reagent.

In still other embodiments, the material has been surface modified by a combination of organic group modification, silanol group modification and coating with a polymer.

In another embodiment, the material has been surface modified by silanol group modification.

In certain embodiments, the surface modified layer may be porous or non-porous.

### Separation Devices and Kits and Methods of Use

In another aspect, the disclosure provides a column or apparatus for normal phase chromatography, high-pressure liquid chromatography, solvated gas chromatography, supercritical fluid chromatography, sub-critical fluid chromatography, carbon dioxide based chromatography, hydrophilic interaction liquid chromatography or covalently-bonded interaction liquid chromatography, or a combination thereof. The column or apparatus includes a housing having at least one wall defining a chamber having an entrance and an exit, as well as a stationary phase according to any embodiments of the present invention disposed therein. The devices can have preformed frits, frits generated by interconnected materials, or devices without frits. The housing and stationary phase can be adapted for normal phase chromatography, high-pressure liquid chromatography, solvated gas chromatography, supercritical fluid chromatography, sub-critical fluid chromatography, carbon dioxide based chromatography, hydrophilic interaction liquid chromatography or covalently-bonded interaction liquid chromatography, or a combination thereof.

In a particular aspect, the disclosure provides a column or apparatus for supercritical fluid chromatography.

Another aspect provides a variety of separations devices having a stationary phase comprising the HPCM materials as described herein. The separations devices include, *e.g.*, chromatographic columns, thin layer plates, filtration membranes, sample cleanup devices and microtiter plates.

The HPCM materials impart to these devices improved lifetimes because of their improved stability. Thus, in a particular aspect, the disclosure provides a chromatographic column having improved lifetime, comprising
a) a column having a cylindrical interior for accepting a packing material, and
b) a packed chromatographic bed comprising the high purity chromatographic material as described herein.

In another particular aspect, the disclosure provides a chromatographic device, comprising
a) an interior channel for accepting a packing material and
b) a packed chromatographic bed comprising the high purity chromatographic material as described herein.

The disclosure also provides for a kit comprising the HPCM materials as described herein, and instructions for use. In one embodiment, the instructions are for use with a separations device, e.g., chromatographic columns, thin layer plates, filtration membranes, sample cleanup devices and microtiter plates. In another embodiment, the instructions are for the separation, isolation, purification, or detection of one or more molecules in a sample.

In one or more embodiments, the chromatographic stationary phase exhibits a retention change or drift of < 5% over 30 days, < 4% over 30 days, < 3% over 30 days, < 2% over 30 days, < 1% over 30 days, < 5% over 10 days, < 4% over 10 days, < 3% over 10 days, < 2% over 10 days, < 1 % over 10 days, < 5% over 3 days, < 4% over 3 days, < 3% over 3 days, < 2% over 3 days, < 1% over 3 days, < 5% over 30 runs, < 4% over 30 runs, < 3% over 30 runs, < 2% over 30 runs, < 1% over 30 runs, < 5% over 10 runs, < 4% over 10 runs, < 3% over 10 runs, < 2% over 10 runs, < 1% over 10 runs, < 5% over 3 runs, < 4% over 3 runs, < 3% over 3 runs, < 2% over 3 runs, or < 1% over 3 runs.

In certain embodiments, the materials of the invention are found to produce significantly improved peak shape as compared to traditional chromatographic materials which do not utilize an ion-paired/charged surface. Furthermore, the materials of the invention are found to mitigate non-specific binding issues associated with traditional chromatographic materials which do not utilize a charged surface. Such benefits, in particular, allow for the identification or confirmation by Mass Spectrometry of low abundant macromolecules because they are not lost to non-specific binding and are not obscured by the degraded peak shapes that have been shown for abundant species, with traditional chromatographic materials, with the increase in sample mass needed to see the low abundant species.

In a particular aspect, the disclosure provides a method for separating a sample using supercritical fluid chromatography comprising:
a.) providing a sample to be separated;
b.) providing a high purity chromatographic material of the invention;
c.) separating the sample using the high purity chromatographic material under supercritical fluid conditions.

### Synthesis of Materials of the Invention

In another aspect, the present disclosure provides a method for preparing a stationary phase material in accordance with the present invention.

The method includes the steps of
a. providing a chromatographic material having free-silanol surface groups
b. reacting the silanol surface groups with a ion-pair forming surface group group to obtain a bonded material; and
c. reacting the resultant bonded material with an ion-pairing reagent (acid or base);
to produce a high purity chromatographic material having ion-paired bound surface moieties.

In certain embodiments, the the ion-pair forming surface group is a basic surface modifying group. In other emboduiments, the covalently-bonded surface modifying group is a nitrogen containing surface modifying group.

In other aspects the covalently-bonded surface modifying group reagent may be selected from the formulas: 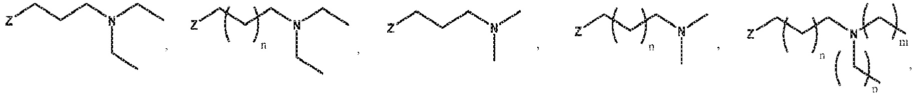 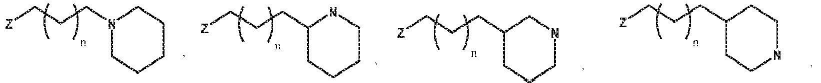 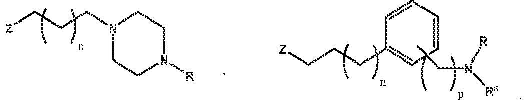 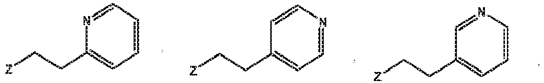 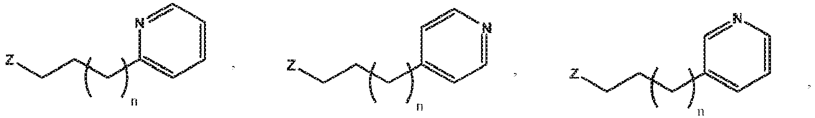 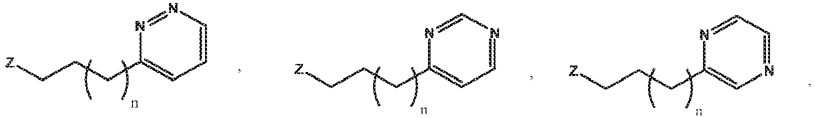 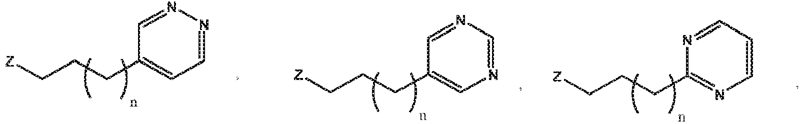 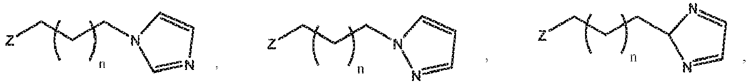 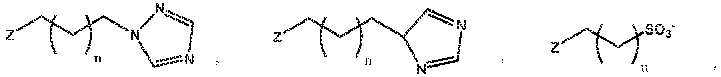 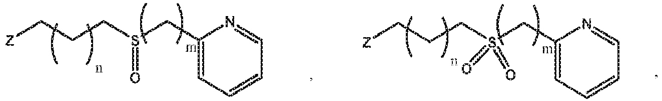 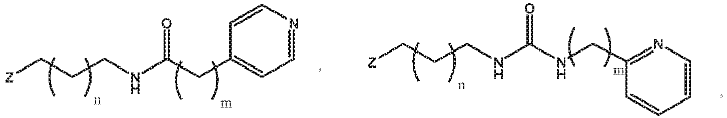 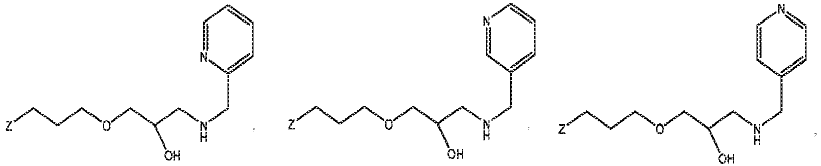 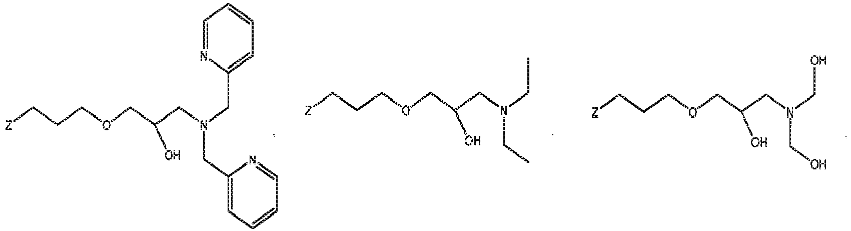 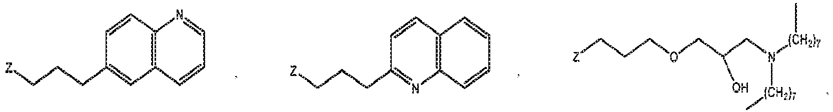 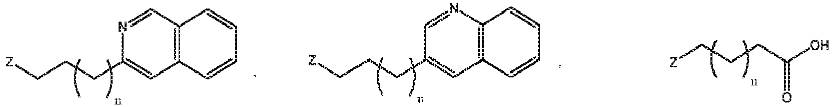 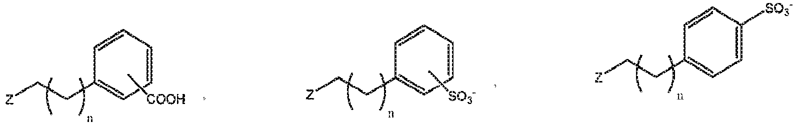 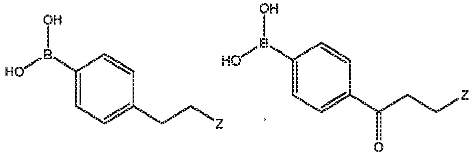 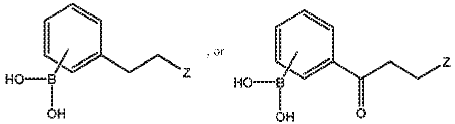 wherein:
each instance of m, n, and p is independently an integer from 0 to 18;
each instance of R and R^{a} is independently alkyl, alkenyl, alkynyl, aryl, cyano, amino, diol, nitro, ester, cation or anion exchange groups, an alkyl or aryl group containing an embedded polar functionalities or chiral moieties;
Z represents a chemically reactive group, including (but not limited to) 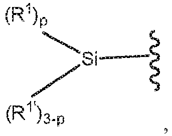 -OH, -OR⁶, amine, alkylamine, dialkylamine, isocyanate, acyl chloride, triflate, isocyanate, thiocyanate, imidazole carbonate, NHS-ester, carboxylic acid, ester, epoxide, alkyne, alkene, azide, -Br, -Cl, or -I;
each occurrence of R¹ independently represents a chemically reactive group on silicon, including (but not limited to) -H, -OH, -OR⁶, dialkylamine, triflate, Br, Cl, I, vinyl, alkene, or-(CH₂)_{m"}Q;
each occurrence of Q is -OH, -OR⁶, amine, alkylamine, dialkylamine, isocyanate, acyl chloride, triflate, isocyanate, thiocyanate, imidazole carbonate, NHS-ester, carboxylic acid, ester, epoxide, alkyne, alkene, azide, -Br, -Cl, or -I;
m" is an integer from 1-8
p is an integer from 1-3;
each occurrence of R^{1'} independently represents F, C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl, fluoroalkyl, or fluoroaryl; and
each occurrence of R⁶ independently represents C1-C18 alkyl, C2-C18 alkenyl, C2-C18 alkynyl, C3-C18 cycloalkyl, C1-C18 heterocycloalkyl, C5-C18 aryl, C5-C18 aryloxy, or C1-C18 heteroaryl.

In yet other embodiments, the covalently-bonded surface modifying group reagent is aminopropyltriethoxysilane, aminopropyltrimethoxysilane, 2-(2-(trichiorosilyl)ethyl)pyridine, 2-(2-(trimethoxy)ethyl)pyridine, 2-(2-(triethoxy)ethyl)pyridine, 2-(4-pyridylethyl)triethoxysilane, 2-(4-pyridylethyl)trimethoxysilane, 2-(4-pyridylethyl)trichlorosilane, chloropropyltrimethoxysilane, chloropropyltrichlorosilane, chloropropyltrichlorosilane, chloropropyltriethoxysilane, imidazolylpropyltrimethoxysilane, imidazolylpropyltriethoxysilane, imidazolylpropyl trichlorosilane, sulfopropyltrisilanol, carboxyethylsilanetriol, 2-(carbomethoxy)ethylmethyldichlorosilane, 2-(carbomethoxy)ethyltrichlorosilane, 2-(carbomethoxy)ethyltrimethoxysilane, n-(trimethoxysilylpropyl)ethylenediamine triacetic acid, (2-diethylphosphatoethyl)triethoxysilane, 3-mercaptopropyltriethoxysilane, 3-mercaptopropyltrimethoxysilane, bis[3-(triethoxysilyl)propyl]disulfide, bis[3-(triethoxysilyl)propyl]tetrasulfide, 2,2-dimethoxy-1-thia-2-silacyclopentane, bis(trichlorosilylethyl)phenylsulfonyl chloride, 2-(chlorosulfonylphenyl)ethyltrichlorosilane, 2-(chlorosulfonylphenyl)ethyltrimethoxysilane, 2-(ethoxysulfonylphenyl)ethyltrimethoxysilane, 2-(ethoxysulfonylphenyl)ethyltrimethoxysilane, 2-(ethoxysulfonylphenyl)ethyltrichlorosilane, sulphonic acid phenethyltrisilanol, (triethoxysilyl ethyl)phenyl phosphonic acid diethyl ester, (trimethoxysilyl ethyl)phenyl phosphonic acid diethyl ester, (trichlorosilyl ethyl)phenyl phosphonic acid diethyl ester, phosphonic acid phenethyltrisilanol, N-(3-trimethoxysilylpropyl)pyrrole, N-(3-triethoxysilylpropyl)-4,5-dihydroimidazole, bis(methyldimethoxysilylpropyl)-N-methylamine, tris(triethoxysilylpropyl)amine, bis(3-trimethoxysilylpropyl)-N-methylamine, (N,N-diethyl-3-aminopropyl)trimethoxysilane, N-(hydroxyethyl)-N-methylaminopropyltrimethoxysilane, 3-(N,N-dimethylaminopropyl)trimethoxysilane, bis(2-hydroxyethyl)-3-aminopropyltriethoxysilane, N,N'-bis(hydroxyethyl)-N,N'-bis(trimethoxysilylpropyl)ethylenediamine, or N,N-dimethyl-3-aminopropylmethyldimethoxysilane.

In other aspects, the covalently-bonded surface modifying group reagent can be those described in WO 2013/173494; WO 2013/173501; WO 2011/017418; US 2012-0273404; or U.S. Application Serial No. 13/750,511 filed January 25, 2013.

In certain embodiments, the ion-pairing reagent is acidic. In other embodiments, the ion-pairing reagent is para-toluene sulfonic acid.

In certain embodiments, the ion-pairing reagent is basic.

In one embodiment, the methods described herein further comprise the step of endcapping remaining silanol groups.

In one embodiment, in the methods described the steps are performed simultaneously.

In another embodiment, the pore structure of the as-prepared high purity chromatographic materials is modified by hydrothermal treatment, which enlarges the openings of the pores as well as the pore diameters, as confirmed by nitrogen (N2) sorption analysis. The hydrothermal treatment is performed by preparing a slurry containing the as-prepared hybrid material and a solution of a base in water, heating the slurry in an autoclave at an elevated temperature, e.g., 100 to 200°C, for a period of 10 to 30 h. The use of an alkyl amine such as trimethylamine (TEA) or Tris(hydroxymethyl) methyl amine or the use of sodium hydroxide is advantageous. The thus-treated material is cooled, filtered and washed with water and methanol, then dried at 80°C under reduced pressure for 16 h.

In certain embodiments, following hydrothermal treatment, the surfaces of the high purity chromatographic materials are modified with various agents. Such "surface modifiers" include (typically) organic functional groups which impart a certain chromatographic functionality to a chromatographic stationary phase. In certain aspects, when the HPCM is a hybrid material, it possesses possess both organic groups and silanol groups which may additionally be substituted or derivatized with a surface modifier.

The surface of the hydrothermally treated high purity chromatographic materials contains organic groups, which can be derivatized by reacting with a reagent that is reactive towards the materials' organic group. For example, vinyl groups on the material can be reacted with a variety of olefin reactive reagents such as bromine (Br2), hydrogen (H2), free radicals, propagating polymer radical centers, dienes and the like. In another example, hydroxyl groups on the material can be reacted with a variety of alcohol reactive reagents such as isocyanates, carboxylic acids, carboxylic acid chlorides and reactive organosilanes as described below. Reactions of this type are well known in the literature, see, e.g., March, J. Advanced Organic Chemistry, 3rd Edition, Wiley, New York, 1985; Odian, G. The Principles of Polymerization, 2nd Edition, Wiley, New York, 1981.

In addition, the surface of the hydrothermally treated high purity chromatographic materials also contains silanol groups, which can be derivatized by reacting with a reactive organosilane. The surface derivatization of the high purity chromatographic materials is conducted according to standard methods, for example by reaction with octadecyltricblorosilane or octadecyldimethylchlorosilane in an organic solvent under reflux conditions. An organic solvent such as toluene is typically used for this reaction. An organic base such as pyridine or imidazole is added to the reaction mixture to catalyze the reaction. The product of this reaction is then washed with water, toluene and acetone. This material can be further treated by hydrolysis in a pH modified aqueous organic solution at ambient or elevated temperatures. An organic solvent such as acetone is typically used for this hydrolysis. Modification of pH can be achieved using acid or base modifiers, including trifluoroacetic acid, formic acid, hydrochloric acid, acetic acid, sodium or ammonium formate, sodium, potassium or ammonium acetate, phosphate buffers, ammonium hydroxide, ammonium carbonate, or ammonium bicarbonate. The product of the hydrolysis is then washed with water, toluene and acetone and dried at 80°C to 100°C under reduced pressure for 16 h. The resultant materials can be further reacted with a short-chain silane such as trimethylchlorosilane to endcap the remaining silanol groups, by using a similar procedure described above.

Surface modifiers such as disclosed herein are attached to the base material, *e*.*g*., *via* derivatization or coating and later crosslinking, imparting the chemical character of the surface modifier to the base material. In one embodiment, the organic groups of the high purity chromatographic materials react to form an organic covalent bond with a surface modifier. The modifiers can form an organic covalent bond to the materials organic group via a number of mechanisms well known in organic and polymer chemistry including but not limited to nucleophilic, electrophilic, cycloaddition, free-radical, carbene, nitrene and carbocation reactions. Organic covalent bonds are defined to involve the formation of a covalent bond between the common elements of organic chemistry including but not limited to hydrogen, boron, carbon, nitrogen, oxygen, silicon, phosphorus, sulfur and the halogens. In addition, carbon-silicon and carbon-oxygen-silicon bonds are defined as organic covalent bonds, whereas silicon-oxygen-silicon bonds that are not defined as organic covalent bonds.

The term "functionalizing group" includes organic functional groups which impart a certain chromatographic functionality to a chromatographic stationary phase, including, *e.g.,* octadecyl (C₁₈) or phenyl. Such functionalizing groups are incorporated into base material directly, or present in, *e.g.,* surface modifiers such as disclosed herein which are attached to the base material, *e.g.,* via derivatization or coating and later crosslinking, imparting the chemical character of the surface modifier to the base material.

In certain embodiments, silanol groups are surface modified. In other embodiments, organic groups are surface modified. In still other embodiments, the high purity chromatographic materials' organic groups and silanol groups are both surface modified or derivatized. In another embodiment, the high purity chromatographic materials are surface modified by coating with a polymer. In certain embodiments, surface modification by coating with a polymer is used in conjunction with silanol group modification, organic group modification, or both silanol and organic group modification. The ionizable modifier may be added to the material by silanol group modification, organic group modification, or by both silanol and organic group modification. The covalently-bonded surface group may be added to the material by silanol group modification, organic group modification, or by both silanol and organic group modification.

More generally, the surface of high purity chromatographic materials may be modified by: treatment with surface modifiers including compounds of formula Zₐ(R')_{b}Si-R", where Z = Cl, Br, I, C₁ - C₅ alkoxy, dialkylamino, *e*.*g*., dimethylamino, or trifluoromethanesulfonate; a and b are each an integer from 0 to 3 provided that a + b = 3; R' is a C₁ - C₆ straight, cyclic or branched alkyl group, and R" is a functionalizing group. In certain instances, such materials have been surface modified by coating with a polymer.

R' includes, *e.g.,* methyl, ethyl, propyl, isopropyl, butyl, t-butyl, sec-butyl, pentyl, isopentyl, hexyl or cyclohexyl; preferably, R' is methyl.

The functionalizing group R" may include alkyl, alkenyl, alkynyl, aryl, cyano, amino, diol, nitro, ester, cation or anion exchange groups, an alkyl or aryl group containing an embedded polar functionalities or chiral moieties. Examples of suitable R" functionalizing groups include chiral moieties, C₁-C₃₀ alkyl, including C₁-C₂₀. such as octyl (C₈), octadecyl (C₁₈) and triacontyl (C₃₀); alkaryl, *e.g.,* C₁-C₄-phenyl; cyanoalkyl groups, *e.g.,* cyanopropyl; diol groups, *e.g.,* propyldiol; amino groups, *e.g.,* aminopropyl; and alkyl or aryl groups with embedded polar functionalities, *e.g.,* .carbonate, amide, urea, ether, thioether, sulfinyl, sulfoxide, sulfonyl, thiourea, thiocarbonate, thiocarbamate, ethylene glycol, heterocyclic, and triazole functionalities or carbamate functionalities such as disclosed in U. S. Patent No. 5,374,755, and chiral moieties. In certain embodiments, R" is selected from the group consisting of aromatic, phenylalkyl, fluoroaromatic, phenylhexyl, pentafluorophenylalkyl and chiral moieties. Such groups include those of the general formula 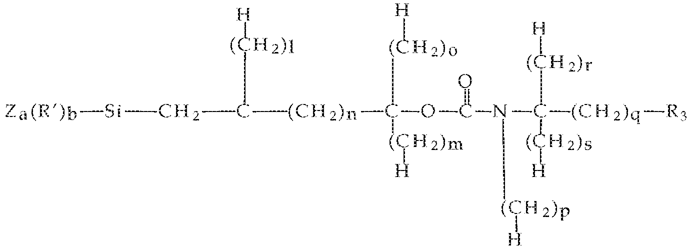 wherein l, m, o, r and s are 0 or 1, n is 0, 1, 2 or 3 p is 0, 1, 2, 3 or 4 and q is an integer from 0 to 19; R₃ is selected from the group consisting of hydrogen, alkyl, cyano and phenyl; and Z, R', a and b are defined as above. Preferably, the carbamate functionality has the general structure indicated below: 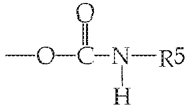 wherein R⁵ may be, *e.g.,* cyanoalkyl, t-butyl, butyl, octyl, dodecyl, tetradecyl, octadecyl, or benzyl. Advantageously, R⁵ is octyl, dodecyl, or octadecyl.

In certain applications, such as chiral separations, the inclusion of a chiral moiety as a functionalizing group is particularly advantageous.

Polymer coatings are known in the literature and may be provided generally by polymerization or polycondensation of physisorbed monomers onto the surface without chemical bonding of the polymer layer to the support (type I), polymerization or polycondensation of physisorbed monomers onto the surface with chemical bonding of the polymer layer to the support (type II), immobilization of physisorbed prepolymers to the support (type III) and chemisorption of presynthesized polymers onto the surface of the support (type IV). *see, e.g.,* Hanson, et al. , J. Chromat. A656 (1993) 369-380. As noted above, coating the hybrid material with a polymer may be used in conjunction with various surface modifications described in the invention.

Thus, in certain embodiments, the covalently-bonded surface modifier is selected from the group consisting of phenylhexyltrichlorosilane, pentafluorophenylpropyltrichlorosilane, octyltrichlorosilane, octadecyltrichlorosilane, octyldimethylchlorosilane and octadecyldimethylchlorosilane. In a further embodiment, the surface modifier is selected from the group consisting of octyltrichlorosilane and octadecyltrichlorosilane.

In another embodiment, the high purity chromatographic materials have been surface modified by a combination of organic group and silanol group modification.

In other embodiments, the high purity chromatographic materials have been surface modified by a combination of organic group modification and coating with a polymer.

In other embodiments, the high purity chromatographic materials have been surface modified by a combination of silanol group modification and coating with a polymer.

In another embodiment, the high purity chromatographic materials have been surface modified via formation of an organic covalent bond between the hybrid cores' and/or surrounding material materials' organic group and the modifying reagent.

In certain embodiments, the high purity chromatographic materials have been surface modified by a combination of organic group modification, silanol group modification and coating with a polymer.

In one embodiment, the high purity chromatographic materials have been surface modified by silanol group modification.

In another embodiment, the disclosure provides a method wherein the high purity chromatographic materials are modified by further including a porogen. In a further embodiment, the porogen is selected from the group consisting of cyclohexanol, toluene, mesitylene, 2-ethylhexanoic acid, dibutylphthalate, 1-methyl-2-pyrrolidinone, 1-dodecanol and Triton X-45. In certain embodiments, the porogen is toluene or mesitylene.

In one embodiment, the disclosure provides a method wherein the high purity chromatographic materials are further modified by including a surfactant or stabilizer. In certain embodiments, the surfactant is Triton X-45, Triton X100, Triton X305, TLS, Pluronic F-87, Pluronic P-105, Pluronic P-123, sodium dodecylsulfate (SDS), ammonia docecylsulfate, TRIS docecylsulfate, or Triton X-165. In certain embodiments, the surfactant is sodium dodecylsulfate (SDS), ammonia docecylsulfate, or TRIS docecylsulfate.

Certain embodiments of the synthesis of the HPCMs of the invention including hybrids, silica, particles, monoliths and superficially porous materials, are described above are further illustrated in the Examples below.

### Examples

The present invention may be further illustrated by the following non-limiting examples describing the surface modification of porous chromatographic materials.

### Materials

All reagents were used as received unless otherwise noted. Those skilled in the art will recognize that equivalents of the following supplies and suppliers exist and, as such, the suppliers listed below are not to be construed as limiting.

### Characterization

Those skilled in the art will recognize that equivalents of the following instruments and suppliers exist and, as such, the instruments listed below are not to be construed as limiting.

The %C values were measured by combustion analysis (CE-440 Elemental Analyzer; Exeter Analytical Inc., North Chelmsford, MA) or by Coulometric Carbon Analyzer (modules CM5300, CM5014, UIC Inc., Joliet, IL). Bromine and Chlorine content were determined by flask combustion followed by ion chromatography (Atlantic Microlab, Norcross, GA). The specific surface areas (SSA), specific pore volumes (SPV) and the average pore diameters (APD) of these materials were measured using the multi-point N2 sorption method (Micromeritics ASAP 2400; Micromeritics Instruments Inc., Norcross, GA). The SSA was calculated using the BET method, the SPV was the single point value determined for P/P₀ > 0.98 and the APD was calculated from the desorption leg of the isotherm using the BJH method. The micropore surface area (MSA) was determined as the cumulative adsorption pore diameter data for pores < 34 Å subtracted from the specific surface area (SSA). The median mesopore diameter (MMPD) and mesopore pore volume (MPV) were measured by Mercury Porosimetry (Micromeritics AutoPore II 9220 or AutoPore IV, Micromeritics, Norcross, GA). Skeletal densities were measured using a Micromeritics AccuPyc 1330 Helium Pycnometer (V2.04N, Norcross, GA). Particle sizes were measured using a Beckman Coulter Multisizer 3 analyzer (30 µm aperture, 70,000 counts; Miami, FL). The particle diameter (dp₅₀) was measured as the 50% cumulative diameter of the volume based particle size distribution. The width of the distribution was measured as the 90% cumulative volume diameter divided by the 10% cumulative volume diameter (denoted 90/10 ratio). Viscosity was determined for these materials using a Brookfield digital viscometer Model DV-11 (Middleboro, MA). Measurements of pH were made with a Oakton pH100 Series meter (Cole-Palmer, Vernon Hills, Illinois) and were calibrated using Orion (Thermo Electron, Beverly, MA) pH buffered standards at ambient WO 2016/176461 PCT/US2016/029803 temperature immediately before use. Titrations were performed using a Metrohm 716 DMS Titrino autotitrator (Metrohm, Hersau, Switzerland), and are reported as milliequivalents per gram (mequiv/g). Multinuclear (¹³C, ²⁹Si) CP-MAS NMR spectra were obtained using a Bruker Instruments Avance-300 spectrometer (7 mm double broadband probe). The spinning speed was typically 5.0-6.5 kHz, recycle delay was 5 sec. and the cross-polarization contact time was 6 msec. Reported ¹³C and ²⁹Si CP-MAS NMR spectral shifts were recorded relative to tetramethylsilane using the external standards adamantane (¹³C CP-MAS NMR, δ 38.55) and hexamethylcyclotrisiloxane (²⁹Si CP-MAS NMR, δ-9.62). Populations of different silicon environments were evaluated by spectral deconvolution using DMFit software. [Massiot, D.; Fayon, F.; Capron, M.; King, I.; Le Calvé, S.; Alonso, B.; Durand, J.-O.; Bujoli, B.; Gan, Z.; Hoatson, G. Magn. Reson. Chem. 2002, 40, 70-76]

**Table 1 - Base Particles Utilized**

| Entry | Material |
|---|---|
| B1 | Hybrid material (1.7 µm 75 Å APD, 1.3 cm³/g TPV)¹ |
| B2 | Hybrid material (3.8 µm, 90 Å APD, 1.3 cm³/g TPV)¹ |
| B3 | Hybrid material (3.8 µm, 125 Å APD, 1.3 cm³/g TPV)¹ |
| B4 | Hybrid material with surrounding hybrid² |
| B5 | Hybrid material (1.7 µm, 125 Å APD, 0.7 cm³/g TPV)¹ |
| B6 | Hybrid material (5.0 µm, 125 Å APD, 0.7 cm³/g TPV)¹ |

| | |
|---|---|
| ¹ As described in US7919177, US 7223473, US6686035 and WO2011084506 ² As described in US2012055860 | |

**Table 2 - Silanes Utilized**

| Entry | Silane¹ |
|---|---|
| S1 | 2-(2-pyridylethyl)trimethoxylsilane |
| S2 | 2-(4-pyridylethyl)trimethoxylsilane |
| S3 | (N,N-diethyl-3-aminopropyl)trimethoxylsilane |
| S4 | 3-cyanopropyldiisopropylchlorosilane |
| S5 | trimethylchlorosilane |
| S6 | triethylchlorosilane |
| S7 | *tert*-butyldimethylchlorosilane |
| S8 | triisopropylchlorosilane |
| S9 | (3,3,3-trifluoropropyl)-dimethylchlorosilane |
| S10 | 3-cyanopropyldimethylchlorosilane |
| S11 | 3-acetoxypropyldimethylchlorosilane |
| S12 | bis(3-cyanopropyl)dichlorosilane |

| | |
|---|---|
| ¹ From Gelest Inc., Morrisville, PA, Silar, Scotia, NY or Aldrich, Milwaukee, WI | |

### Example 1 - Representative Procedure for Primary Bonding

In a typical reaction, hybrid or silica material (10 g) was refluxed in toluene (190 mL) using a Dean-Stark trap for 1 hour. Upon cooling, the desired silane and toluene (90 mL) were added to the flask. The mixture was stirred at room temperature for 1 hour, and then heated to reflux for 16 hours. The reaction was then cooled and the product was filtered and washed successively with toluene, acetone, 1:1 v/v acetone/water, and acetone (all solvents from Fisher Scientific). The particles were then slurried in a solution of acetone/0.1 M NH₄HCO₃ (60/40, v/v, 200 mL) and stirred for 20 hrs at 50 °C. After cooling to room temperature, the particles were collected by filtration, and washed successively with 1:1 v/v acetone/water and acetone. The particles were dried overnight under vacuum at 80 °C. Specific examples are presented in **Table 3.**

**Table 3 - List of Examples for Primary Bonding**

| **Example** | **Base Material** | | **Silane¹** | | **Bonding Coverage (µmol/m²)** |
|---|---|---|---|---|---|
| | **Particle** | **Amount (g)** | **Silane¹ Used** | **Amount (g)** | |
| 1A | B2 | 200 | S1 | 109 | 2.32 |
| 1B | B2 | 15 | S1 | 3.2 | 1.54 |
| 1C | B3 | 20 | S1 | 7.1 | 2.90 |
| 1D | B1 | 20 | S1 | 6.2 | 2.94 |
| 1E | B2 | 15 | S1 | 8.3 | 3.03 |
| 1F | B2 | 25 | S1 | 3.6 | 1.06 |
| 1G | B2 | 80 | S2 | 43.8 | 2.06 |
| 1H | B2 | 60 | S3 | 43.9 | 2.32 |
| 1I | B2 | 15 | S3 | 2.6 | 1.08 |
| 1J | B2 | 15 | S3 | 2.2 | 0.93 |
| 1Q | B4 | 20 | S1 | 7.1 | 3.41 |
| 1R | B5 | 50 | S1 | 8.6 | 2.07 |
| 1S | B6 | 1400 | S1 | 230 | 2.05 |

### Example 2 - Representative Procedure for Primary Bonding with More Than One Silane

In a typical reaction, hybrid material (10 g) was refluxed in toluene (190 mL) using a Dean-Stark trap for 1 hour. The slurry was then cooled to room temperature and silane A was added and the mixture heated to reflux for 1 hour. Upon cooling, silane B and toluene (90 mL) were added to the flask. The mixture was stirred at room temperature for 1 hour, and then heated to reflux for 16 hours. The reaction was then cooled and the product was filtered and washed successively with toluene, acetone, 1:1 v/v acetone/water, and acetone (all solvents from Fisher Scientific). The particles were then slurried in a solution of acetone/0.1 M NH₄HCO₃ (60/40, v/v, 200 mL) and stirred for 20 hrs at 50 °C. After cooling to room temperature, the particles were collected by filtration, and washed successively with 1:1 v/v acetone/water and acetone. The particles were dried overnight under vacuum at 80 °C. Specific examples are presented in **Table 4.**

**Table 4 - List of Examples for Primary Bonding with Mixed Silanes.**

| **Example** | **Base Material** | | **Silanes** | | | | **Bonding Coverage (µmol/m²)** |
|---|---|---|---|---|---|---|---|
| | **Particle** | **Amount (g)** | **Silane¹ A Used** | **Amount (g)** | **Silane B Used** | **Amount (g)** | |
| 2A | B2 | 15 | S1 | 0.52 | S3 | 8.6 | 2.33 |
| 2B | B2 | 20 | S3 | 0.3 | S1 | 11.1 | 2.35 |
| 2C | B3 | 20 | S3 | 0.72 | S1 | 11.1 | 2.27 |
| 2D | B1 | 20 | S3 | 1.43 | S1 | 11.1 | 2.26 |

### Example 3 - Representative Procedure for Secondary Bonding

In a typical example, the materials from **Examples 1** and **2** (10 g) were refluxed in toluene (190 mL) using a Dean-Stark trap for 1 hour. The mixture was then cooled to room temperature and the desired silane and imidazole (Aldrich - Milwaukee, WI, 1.2 x molar excess to silane) were added. The mixture was refluxed for 4 hours, and then cooled to room temperature. The particles were collected by filtration, and washed successively with toluene, acetone, 1:1 v/v acetone/water, and acetone and then dried overnight under vacuum. Specific examples are presented in **Table 5.**

### Additional Steps to Produce Material 3L

Material 3K (5.0 g) was heated at 60 °C for 6 hours in 40 mL of 0.1 M hydrochloric acid. After cooling the material was collected by filtration and washed with successively with water, and acetone and then dried at 80 °C overnight under vacuum.

**Table 5 - List of Examples for Secondary Bonding/Functionalization**

| **Example** | **Base material** | | **Silane¹** | | **Bonding Coverage (µmol/m²)** | **Overall coverage¹ (µmol/m²)** |
|---|---|---|---|---|---|---|
| | **Particle** | **Amount (g)** | **Silane¹ Used** | **Amount (g)** | | |
| 3A | 1A | 15 | S4 | 20.3 | 0.64 | 2.96 |
| 3B | 1A | 20 | S10 | 18.0 | 1.32 | 3.64 |
| 3C | 1A | 15 | S10 | 1.5 | 0.57 | 2.89 |
| 3D | 1A | 20 | S5 | 13.1 | 1.42 | 3.74 |
| 3E | 1A | 10 | S5 | 1.0 | 0.62 | 2.94 |
| 3F | 1A | 10 | S5 | 0.51 | 0.37 | 2.69 |
| 3G | 1A | 20 | S6 | 18.2 | 1.08 | 2.40 |
| 3H | 1A | 20 | S7 | 18.1 | 0.80 | 3.12 |
| 3I | 1A | 20 | S8 | 23.2 | 0.49 | 2.81 |
| 3J | 1A | 20 | S9 | 22.9 | 0.96 | 3.28 |
| 3K | 1A | 30 | S11 | 21.0 | 0.86 | 3.18 |
| 3L | 3K | 5 | See Experimental | | 0.30 | 2.62 |
| 3M | 1A | 5 | S12 | 3.7 | 1.12 | 2.34 |
| 3N | 1B | 10 | S4 | 13.5 | 0.89 | 2.43 |
| 3O | 1C | 10 | S4 | 8.9 | 0.67 | 2.57 |
| 3P | 1D | 10 | S4 | 7.5 | 0.64 | 2.58 |
| 3Q | 1E | 10 | S4 | 13.3 | 0.54 | 3.57 |
| 3R | 1F | 10 | S4 | 13.5 | 1.08 | 2.14 |
| 3S | 1G | 20 | S4 | 27.1 | 0.71 | 2.77 |
| 3T | 1G | 20 | S10 | 20.1 | 1.36 | 3.42 |
| 3U | 1H | 20 | S4 | 27.1 | 0.37 | 2.69 |
| 3V | 1H | 20 | S10 | 20.1 | 0.88 | 3.20 |
| 3W | 1I | 10 | S4 | 13.5 | 0.77 | 1.85 |
| 3X | 1J | 10 | S4 | 13.5 | 0.97 | 1.90 |
| 3Y | 2A | 10 | S4 | 13.3 | 0.44 | 2.77 |
| 3Z | 2B | 20 | S4 | 26.5 | 0.67 | 3.02 |
| 3AA | 2C | 20 | S4 | 26.5 | 0.69 | 2.96 |
| 3BB | 2D | 20 | S4 | 26.5 | 0.66 | 2.92 |

| | | | | | | |
|---|---|---|---|---|---|---|
| ¹Combined coverage (*i.e.*, coverage from Example 1/Example 2 material + coverage from Example 3 material) | | | | | | |

### Example 4 - Representative Procedure for Anhydrous Reaction of Bonded Materials with Acid or Base

In a typical example, the materials from **Examples 1, 2** and **3** (20 g) were refluxed with a given concentration of acid or base in methanol (100 mL) in a round bottom flask equipped with a condensor. The mixture was then cooled to room temperature and particles were collected by filtration, washed 5x with methanol and then dried overnight under vacuum. Specific examples are presented in **Table 6.**

**Table 6 - List of Examples for Preparing Ion-Paired Materials**

| **Example** | **Starting Material** | | | **Ion-Pairing Reaction** | |
|---|---|---|---|---|---|
| | **Particle** | **Amount (g)** | **Primary Bonding Coverage (µmol/m²)** | **Acid/Base Utilized** | **Charge (µmol/m²)** |
| 4A | 1S | 20 | 2.05 | *p-*Toluenesulfonic Acid | 0.5 |
| 4B | 1S | 20 | 2.05 | | 2.5 |

### Example 5

The general procedure for bondings/functionalization of particles that is detailed in Examples 1-4 is applied to modify the surface silanol groups of different porous materials. Included in this are monolithic, spherical, granular, superficially porous and irregular materials that are silica, hybrid inorganic/organic materials, hybrid inorganic/organic surface layers on hybrid inorganic/organic, silica, titania, alumina, zirconia, polymeric or carbon materials, and silica surface layers on hybrid inorganic/organic, silica, titania, alumina, zirconia or polymeric or carbon materials. Also includes are stationary phase materials in the form of a spherical material, non-spherical material (e.g., including toroids, polyhedron); stationary phase materials having a highly spherical core morphology, a rod shaped core morphology, a bent-rod shaped core morphology, a toroid shaped core morphology; or a dumbbell shaped core morphology; and stationary phase materials having a mixture of highly spherical, rod shaped, bent rod shaped, toroid shaped, or dumbbell shaped morphologies. Example hybrid materials are shown in U.S. Pat. Nos. 4,017,528, 6,528,167, 6,686,035, and 7,175,913 as well as International Publication No. WO2008/103423. Superficially porous particle include those describe in U.S. Pub. Nos. 2013/0112605, 2007/0189944, and 2010/061367. The particles size for spherical, granular or irregular materials can vary from 5-500 µm; more preferably 15-100 µm; more preferably 20-80 µm; more preferably 40-60 µm. The APD for these materials can vary from 30 to 2,000 Å; more preferably 40 to 200 Å; more preferably 50 to 150 Å. The SSA for these materials can vary from 20 to 1000 m²/g; more preferably 90 to 800 m²/g; more preferably 150 to 600 m²/g; more preferably 300 to 550 m²/g. The TPV for these materials can vary from 0.3 to 1.5 cm³/g; more preferably 0.5 to 1.4 cm³/g ; more preferably 0.7 to 1.3 cm³/g. The macropore diameter for monolithic materials can vary from 0.1 to 30 µm, more preferably 0.5 to 25 µm, more preferably 1 to 20 µm.

### Example 6 - Retention Change in Materials from Examples 4A and 4B

All measures of retention were recorded using the absolute peak retentions under isocratic chromatographic conditions. The average percent retention change for materials from Examples 4A and 4B were compared to the same results from Example 1S. Materials from Examples 4A and 4B showed the ability to provide less retention change over the course of the test. The average percent retention change was calculated by taking the percent difference of the average absolute peak retentions measured on the day three chromatographic test from the average absolute peak retentions measured on the day one chromatographic test. The columns were equilibrated under Mix1 test conditions for 20 minutes followed by three injections of Mix1 and then equilibrated under Mix2 Test conditions for 10 minutes, followed by three injections of Mix2. Conditions are shown in **Table 7**

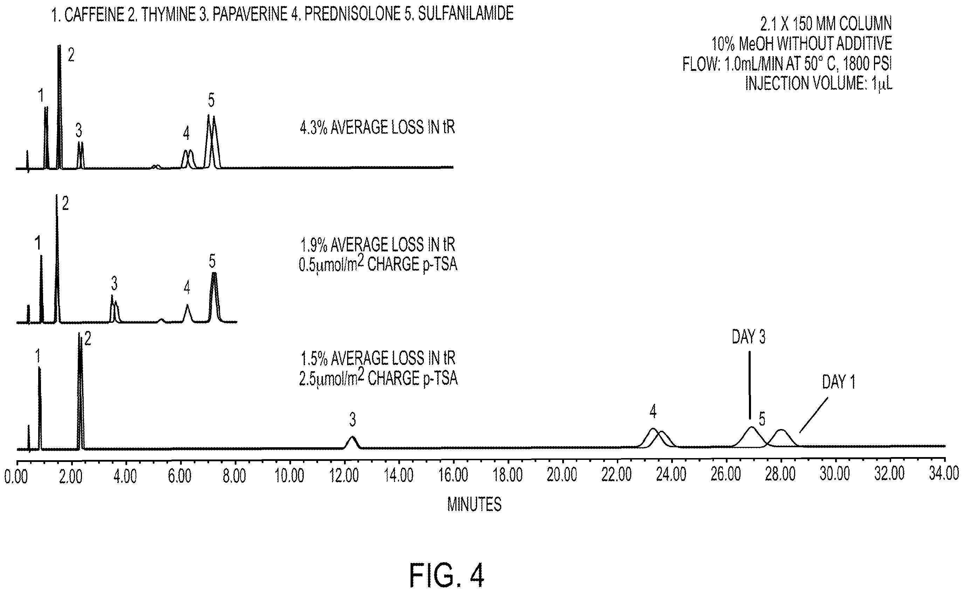

Materials from Examples 4A and 4B provided more retention than Example 1S. A direct correlation between the percent more retention and the amount of *p*-Toluenesulfonic Acid that is charged to the chromatographic material was found. The percent more retention was calculated by taking the percent difference of the day one average absolute peak retentions measured for Mix 1 and Mix 2 from the day one average absolute peak retentions measured for Mix 1 and Mix 2 on example 1S. Results are shown in **Table 8** and in **Figure 4****.**

**Table 7 - Chromatographic Test Conditions for Retention Change Measurements**

| System | ACQUITY UPC [TM - Waters Technologies Corporation] with PDA detector and Empower 2 software |
|---|---|
| Co-Solvent Mix1 | 5% methanol |
| Sample Mix1 | 3-benzoylpyridine (0.1mg/mL) |
| Co-Solvent Mix2 | 10% methanol |
| Sample Mix2 | caffeine, thymine, papaverine, prednisolone, sulfanilamide (0.2mg/mL each) |
| Column Dimension | 2.1 x 150 mm |
| Flow Rate | 1.0 mL/min |
| Column Temperature | 50°C |
| Back Pressure | 1800 psi |
| Detector | ACQUITY PDA [TM - Waters Technologies Corporation] with SFC Flow Cell |
| Detector Setting | 254 nm 40 spec/sec |
| Weak Needle Wash | *iso*-propanol |
| Injection | 1.0 µL (2.0 µL loop with PLUNO injection mode) |

**Table 8 - Retention Change in Materials from Examples 4A and 4B**

| **Example** | **Average % Retention Change** | % **More Retention than Example 1S** |
|---|---|---|
| 1S | 4.3 | / |
| 4A | 1.9 | 3.4 |
| 4B | 1.5 | 241.3 |

### Example 7 - Peak Shape for Basic Analytes in Materials from Examples 4A and 4B

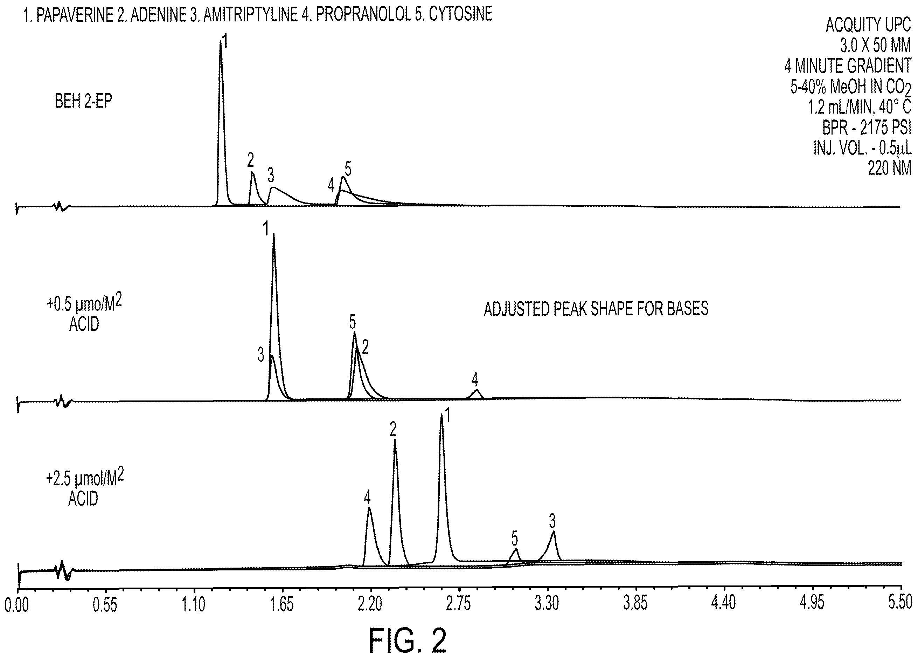

Peak shape for basic analytes were compared using generic gradient conditions. Materials from Examples 4A and 4B provided better peak shape for strong basic analytes compared to Example 1S. The level of improvement is controllable by the amount *of p-*Toluenesulfonic Acid that is charged to the chromatographic material. The columns were equilibrated for 20 minutes under initial gradient conditions followed by single injections of each basic analyte under gradient conditions. The gradient conditions are shown in **Table 9**. Peak shape results are shown in **Figure 2****.**

**Table 9 - Chromatographic Test Conditions for Gradient Peak Shape Results**

| System | ACQUITY UPC [TM - Waters Technologies Corporation] with PDA detector and Empower 2 software |
|---|---|
| Gradient | 5-40% methanol in 4.0 minutes, 40% hold for 1.0 minutes |
| Analytes | papaverine, adenine, amitriptyline, propranolol, cytosine (0.2mg/mL each) |
| Column Dimension | 3.0 x 50 mm |
| Flow Rate | 1.2 mL/min |
| Column Temperature | 40°C |
| Back Pressure | 2175 psi |
| Detector | ACQUITY PDA [TM - Waters Technologies Corporation] with SFC Flow Cell |
| Detector Setting | 220 nm 40 spec/sec |
| Weak Needle Wash | *iso*-propanol |
| Injection | 1.0 µL (2.0 µL loop with PLUNO injection mode) |

Unless indicated otherwise, all techniques, including the use of kits and reagents, can be carried out according to the manufacturers' information, methods known in the art.

Recitation of ranges of values herein is merely intended to serve as a shorthand method of referring individually to each separate value falling within the range. Unless otherwise indicated, each individual value is incorporated into the specification as if it were individually recited.

The specification should be understood as disclosing and encompassing all possible permutations and combinations of the described aspects, embodiments, and examples unless the context indicates otherwise. One of ordinary skill in the art will appreciate that the invention can be practiced by other than the summarized and described aspect, embodiments, and examples, which are presented for purposes of illustration and not limitation.

## Claims

1. A high purity chromatographic material comprising a chromatographic surface wherein the chromatographic surface comprises an ion-paired bonded moiety, wherein the ion-paired bonded moiety is formed between a basic ion-pair forming surface group and an acidic counterion, wherein the basic ion-pair forming surface group is a nitrogen-containing surface group, and wherein the acidic counterion is a sulfonic acid counterion.

2. The high purity chromatographic material of Claim 1, wherein the chromatographic surface further comprises covalently-bonded surface groups,
preferably wherein the ratio of the covalently-bonded surface group : ion-paired moiety is from about 2.5:1 to about 350:1, more preferably from about 3:1 to about 200:1, most preferably from about 4:1 to about 35:1; or
wherein the covalently-bonded surface group is a C4 to C30 bonded phase, an aromatic, a phenylalkyl, a fluoro-aromatic, a phenylhexyl, a pentafluorophenylalkyl, a chiral, or an embedded polar bonded phase, more preferably a C18 bonded phase.

3. The high purity chromatographic material of Claim 1, wherein the basic ion-pair forming surface group comprises a pyridinyl moiety, preferably the basic ion-pair forming surface group comprises a 2-pyridinyl-ethylene moiety.

4. The high purity chromatographic material of Claim 1, wherein the sulfonic acid counterion is a paratoluene sulfonic acid counterion.

5. The high purity chromatographic material of Claim 1, wherein the basic ion-pair forming surface group comprises a moiety of one of the following structures: 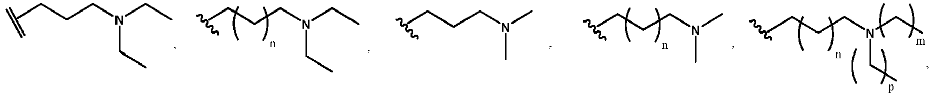 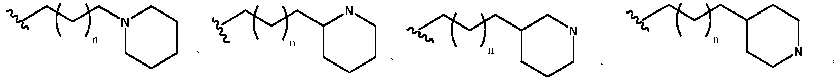 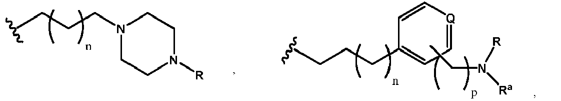 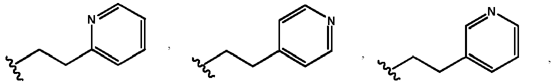 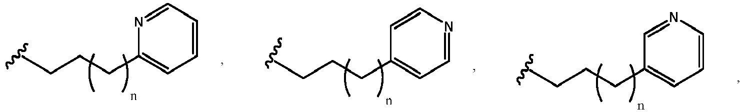 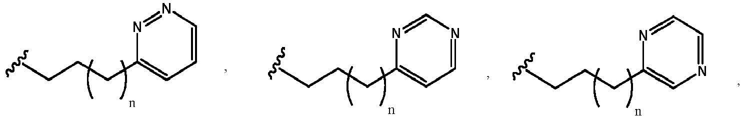 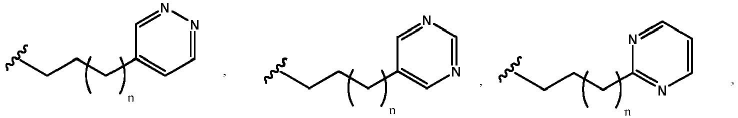 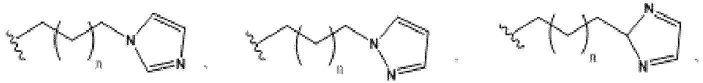 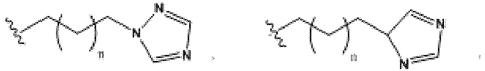 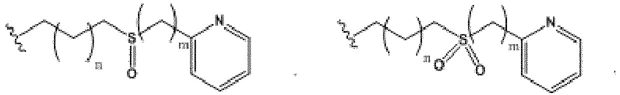 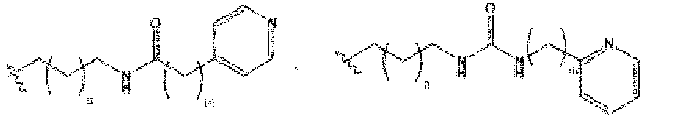 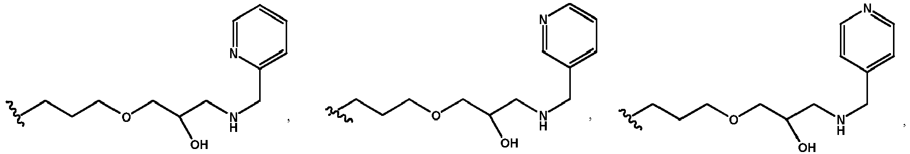 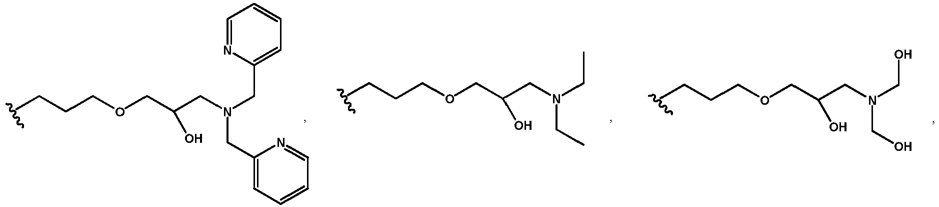 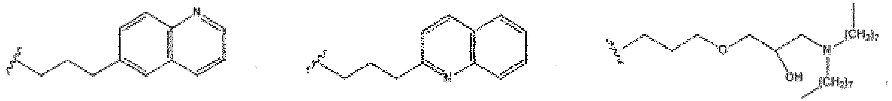 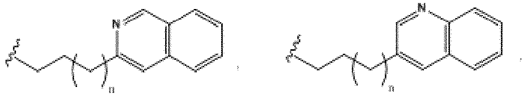 wherein
each instance of m, n, and p is independently an integer from 0 to 18; and
each instance of R and R^{a} is independently alkyl, alkenyl, alkynyl, aryl, cyano, amino, diol, nitro, ester, cation or anion exchange groups, an alkyl or aryl group containing an embedded polar functionalities or chiral moieties.

6. The high purity chromatographic material of Claim 4 wherein the percentage of the ion-pair forming surface groups converted to ion-paired bonded moieties is from 1% to 100%, preferably from 10% to 100%, more preferably from 25% to 100%.

7. The high purity chromatographic material of Claim 1, wherein the concentration of ion-paired moiety on the surface of the material is less than about 10 µmol/m², preferably less than about 2 µmol/m², more preferably less than about 0.5 µmol/m²; or
from about 0.01 µmol/m² to about 10 µmol/m², preferably from about 0.25 µmol/m² to about 5 µmol/m², more preferably from about 0.5 µmol/m² to about 2 µmol/m².

8. The high purity chromatographic material of Claim 1 further comprising a chromatographic core material, preferably wherein the chromatographic core is a silica material, a hybrid inorganic/organic material, a superficially porous material, an inorganic material with a hybrid surface layer, a hybrid material with an inorganic surface layer, or a hybrid material with a different hybrid surface layer.

9. The high purity chromatographic material of Claim 1, wherein the material is in the form of a particle, a monolith, or a superficially porous material.

10. The high purity chromatographic material of Claim 1, wherein said chromatographic material has a surface area of about 25 to 1100 m²/g, preferably about 80 to 500 m²/g, more preferably about 120 to 330 m²/g; or said chromatographic material has a pore volume of about 0.15 to 1.7 cm³/g, preferably about 0.5 to 1.3 cm³/g, wherein the surface area and pore volume are determined by the multi-point N2 sorption method, wherein the surface area is calculated using the BET method, and wherein the pore volume is a single point value determined for P/P₀ > 0.98.

11. The high purity chromatographic material of Claim 1 wherein said chromatographic material has a micropore surface area of less than about 110 m²/g, preferably less than about 105 m²/g, more preferably less than about 80 m²/g, most preferably less than about 50 m²/g, wherein the micropore surface area is determined by the multi-point N2 sorption method, wherein the micropore surface area is a cumulative adsorption pore diameter for pores < 34 Å subtracted from a surface area of the chromatographic material, and wherein the surface area is calculated using the BET method.

12. The high purity chromatographic material of Claim 1, wherein said chromatographic material has an average pore diameter of about 20 to 1500Å, preferably about 50 to 1000Å, more preferably about 100 to 750Å, most preferably about 110 to 500Å, wherein the average pore diameter is determined by the multi-point N2 sorption method, and wherein the average pore diameter is calculated from a desorption leg of an N2 isotherm using the BJH method.

13. The high purity chromatographic material of Claim 1, wherein the material has been surface modified, preferably wherein the material has been surface modified by one of the following:
(a) coating with a polymer,
(b) coating with a polymer by a combination of organic group and silanol group modification,
(c) combination of organic group modification and coating with a polymer,
(d) combination of silanol group modification and coating with a polymer,
(e) formation of an organic covalent bond between the material's organic group and the modifying reagent,
(f) combination of organic group modification, silanol group modification and coating with a polymer.

14. The high purity chromatographic material of Claim 1 further comprising a nanoparticle dispersed within the material, preferably wherein the nanoparticle is a mixture of more than one nanoparticle, the nanoparticle is present in <20% or <5% by weight of the nanocomposite, the nanoparticle is crystalline or amorphous, the nanoparticle is a substance which comprises one or more moieties selected from the group consisting of silicon carbide, aluminum, diamond, cerium, carbon black, carbon nanotubes, zirconium, barium, cerium, cobalt, copper, europium, gadolinium, iron, nickel, samarium, silicon, silver, titanium, zinc, boron, oxides thereof, and nitrides thereof, the nanoparticle is a substance which comprises one or more moieties selected from the group consisting of nano-diamonds, silicon carbide, titanium dioxide, cubic-boronitride, or the nanoparticle is less than or equal to 200 nm in diameter, preferably less than or equal to 100 nm in diameter, more preferably less than or equal to 50 nm in diameter, most preferably less than or equal to 20 nm in diameter.

## Patentansprüche

1. Hochreines chromatographisches Material, umfassend eine chromatographische Oberfläche, wobei die chromatographische Oberfläche ein ionengepaartes gebundenes Molekülteil umfasst, wobei das ionengepaarte gebundene Molekülteil zwischen einer basischen ein lonenpaar ausbildenden Oberflächengruppe und einem sauren Gegenion ausgebildet ist, wobei die basische ein lonenpaar ausbildende Oberflächengruppe eine stickstoffhaltige Oberflächengruppe ist, und wobei das saure Gegenion ein Sulfonsäuregegenion ist.

2. Hochreines chromatographisches Material nach Anspruch 1, wobei die chromatographische Oberfläche ferner kovalent gebundene Oberflächengruppen umfasst, vorzugsweise wobei das Verhältnis der kovalent gebundenen Oberflächengruppe:
ionengepaartes Molekülteil von etwa 2,5:1 bis etwa 350:1, stärker bevorzugt von etwa 3:1 bis etwa 200:1, am stärksten bevorzugt von etwa 4:1 bis etwa 35:1 beträgt; oder
wobei die kovalent gebundene Oberflächengruppe eine C4- bis C30-gebundene Phase, eine aromatische, eine Phenylalkyl-, eine fluoraromatische, eine Phenylhexyl-, eine Pentafluorphenylalkyl-, eine chirale, oder eine eingebettete polare gebundene Phase, stärker bevorzugt eine C18-gebundene Phase, ist.

3. Hochreines chromatographisches Material nach Anspruch 1, wobei die basische ein lonenpaar ausbildende Oberflächengruppe ein Pyridinylmolekülteil umfasst, wobei vorzugsweise die basische ein lonenpaar ausbildende Oberflächengruppe ein 2-Pyridinylethylenmolekülteil umfasst.

4. Hochreines chromatographisches Material nach Anspruch 1, wobei das Sulfonsäuregegenion ein Paratoluolsulfonsäuregegenion ist.

5. Hochreines chromatographisches Material nach Anspruch 1, wobei die basische ein lonenpaar ausbildende Oberflächengruppe ein Molekülteil mit einer der folgenden Strukturen umfasst: 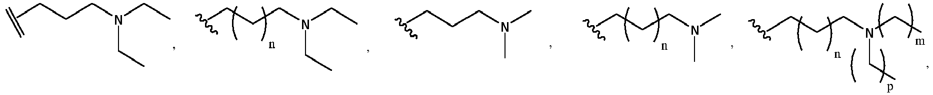 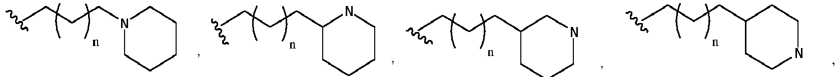 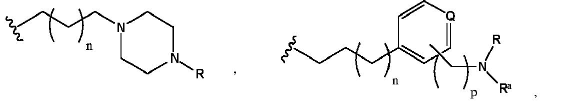 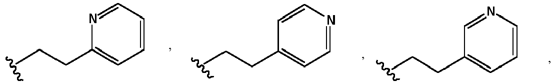 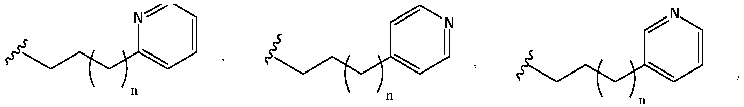 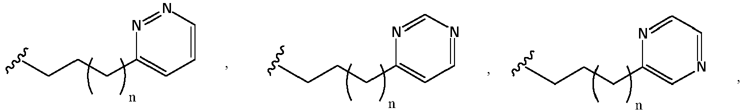 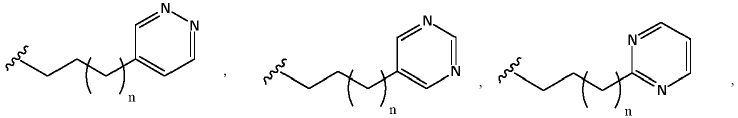 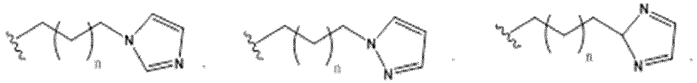 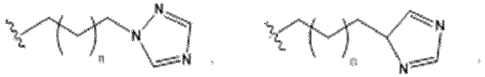 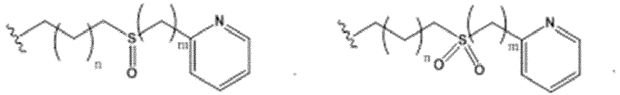 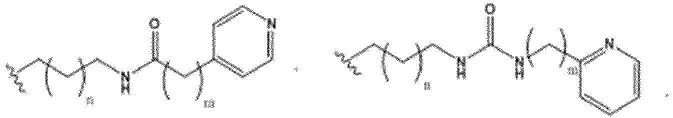 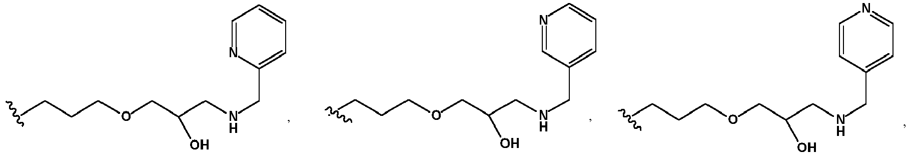 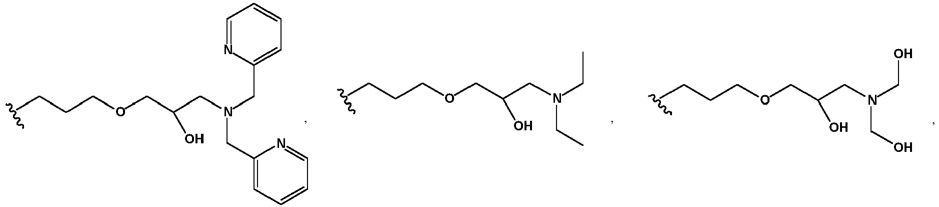 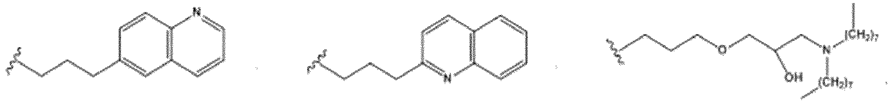 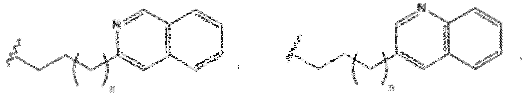 wobei jeder Fall von m, n und p unabhängig eine ganze Zahl von 0 bis 18 ist; und
wobei jeder Fall von R und R^{a} unabhängig Alkyl-, Alkenyl-, Alkinyl-, Aryl-, Cyano-, Amino-, Diol-, Nitro-, Ester-, Kationen- oder Anionenaustauschgruppen, eine Alkyl-oder Arylgruppe, die eingebettete polare Funktionalitäten oder chirale Molekülteile enthält, ist.

6. Hochreines chromatographisches Material nach Anspruch 4, wobei der Prozentsatz der ein lonenpaar ausbildenden Oberflächengruppen, die in ionenpaargepaarte gebundene Molekülteile umgewandelt werden, 1 % bis 100 %, vorzugsweise 10 % bis 100 %, stärker bevorzugt 25 % bis 100 % beträgt.

7. Hochreines chromatographisches Material nach Anspruch 1, wobei die Konzentration des ionengepaarten Molekülteils auf der Oberfläche des Materials weniger als etwa 10 µmol/m², vorzugsweise weniger als etwa 2 µmol/m², stärker bevorzugt weniger als etwa 0,5 µmol/m² beträgt; oder
von etwa 0,01 µmol/m² bis etwa 10 µmol/m², vorzugsweise von etwa 0,25 µmol/m² bis etwa 5 µmol/m², stärker bevorzugt von etwa 0,5 µmol/m² bis etwa 2 µmol/m².

8. Hochreines chromatographisches Material nach Anspruch 1, ferner umfassend ein chromatographisches Kernmaterial, vorzugsweise wobei der chromatographische Kern ein Siliciumdioxidmaterial, ein hybrides anorganisches/organisches Material, ein oberflächenporöses Material, ein anorganisches Material mit einer hybriden Oberflächenschicht, ein Hybridmaterial mit einer anorganischen Oberflächenschicht, oder ein Hybridmaterial mit einer anderen hybriden Oberflächenschicht ist.

9. Hochreines chromatographisches Material nach Anspruch 1, wobei das Material in Form eines Partikels, eines Monolithen, oder eines oberflächenporösen Materials vorliegt.

10. Hochreines chromatographisches Material nach Anspruch 1, wobei das chromatographische Material eine Oberfläche von etwa 25 bis 1100 m²/g, vorzugsweise etwa 80 bis 500 m²/g, stärker bevorzugt etwa 120 bis 330 m²/g, aufweist; oder
wobei das chromatographische Material ein Porenvolumen von etwa 0,15 bis 1,7 cm³/g, vorzugsweise etwa 0,5 bis 1,3 cm³/g aufweist, wobei die Oberfläche und das Porenvolumen durch das Mehrpunkt-N2-Sorptionsverfahren bestimmt werden, wobei die Oberfläche unter Verwendung des BET-Verfahrens berechnet wird, und wobei das Porenvolumen ein Einpunktwert, bestimmt für P/P₀ > 0,98, ist.

11. Hochreines chromatographisches Material nach Anspruch 1, wobei das chromatographische Material eine Mikroporenoberfläche von weniger als etwa 110 m²/g, vorzugsweise weniger als etwa 105 m²/g, stärker bevorzugt weniger als etwa 80 m²/g, am stärksten bevorzugt weniger als etwa 50 m²/g aufweist, wobei die Mikroporenoberfläche durch das Mehrpunkt-N2-Sorptionsverfahren bestimmt wird, wobei die Mikroporenoberfläche ein kumulativer Adsorptionsporendurchmesser für Poren < 34 Å ist, der von einer Oberfläche des chromatographischen Materials subtrahiert ist, und wobei die Oberfläche unter Verwendung des BET-Verfahrens berechnet wird.

12. Hochreines chromatographisches Material nach Anspruch 1, wobei das chromatographische Material einen durchschnittlichen Porendurchmesser von etwa 20 bis 1500 Å, vorzugsweise etwa 50 bis 1000 Å, stärker bevorzugt etwa 100 bis 750 Å, am stärksten bevorzugt etwa 110 bis 500 Å aufweist, wobei der durchschnittliche Porendurchmesser durch das Mehrpunkt-N2-Sorptionsverfahren bestimmt wird, und wobei der durchschnittliche Porendurchmesser aus einem Desorptionszweig einer N2-Isotherme unter Verwendung des BJH-Verfahrens berechnet wird.

13. Hochreines chromatographisches Material nach Anspruch 1, wobei das Material oberflächenmodifiziert wurden ist, vorzugsweise wobei das Material durch eines von Folgendem oberflächenmodifiziert wurden ist:
(a) Beschichten mit einem Polymer,
(b) Beschichten mit einem Polymer durch eine Kombination aus einer organischen Gruppen- und Silanolgruppenmodifikation,
(c) Kombination von organischer Gruppenmodifikation und Beschichten mit einem Polymer,
(d) Kombination von Silanolgruppenmodifikation und Beschichten mit einem Polymer,
(e) Ausbildung einer organischen kovalenten Bindung zwischen der organischen Gruppe des Materials und dem modifizierenden Reagens,
(f) Kombination aus organischer Gruppenmodifikation, Silanolgruppenmodifikation und Beschichten mit einem Polymer.

14. Hochreines chromatographisches Material nach Anspruch 1, das ferner ein innerhalb des Materials dispergiertes Nanopartikel umfasst, wobei das Nanopartikel vorzugsweise eine Mischung aus mehr als einem Nanopartikel ist, das Nanopartikel in <20 Gew.-% oder <5 Gew.-% des Nanoverbundes vorhanden ist, das Nanopartikel kristallin oder amorph ist, das Nanopartikel eine Substanz ist, die ein oder mehrere Molekülteile umfasst, die aus der Gruppe ausgewählt sind, die aus Siliziumkarbid, Aluminium, Diamant, Cer, Industrieruß, Kohlenstoffnanoröhren, Zirkonium, Barium, Cer, Kobalt, Kupfer, Europium, Gadolinium, Eisen, Nickel, Samarium, Silizium, Silber, Titan, Zink, Bor, deren Oxide und Nitride besteht, das Nanopartikel eine Substanz ist, die ein oder mehrere Molekülteile umfasst, die aus der Gruppe ausgewählt sind, die aus Nanodiamanten, Siliciumcarbid, Titandioxid, kubischem Bornitrid besteht, oder das Nanopartikel einen Durchmesser von höchstens 200 nm, vorzugsweise weniger als oder gleich 100 nm, stärker bevorzugt weniger als oder gleich 50 nm, am stärksten bevorzugt weniger als oder gleich 20 nm aufweist.

## Revendications

1. Matériau chromatographique de haute pureté comprenant une surface chromatographique, la surface chromatographique comprenant une fraction liée par paires d'ions, dans lequel la fraction liée par paires d'ions est formée entre un groupe de surface formant une paire d'ions basique et un contre-ion acide, dans lequel le groupe de surface formant une paire d'ions basique est un groupe de surface contenant de l'azote, et dans lequel le contre-ion acide est un contre-ion d'acide sulfonique.

2. Matériau chromatographique de haute pureté selon la revendication 1, dans lequel la surface chromatographique comprend en outre des groupes de surface liés par covalence, de préférence dans lequel le rapport entre le groupe de surface lié par covalence :
la fraction de paires d'ions est d'environ 2,5:1 à environ 350:1, plus préférablement d'environ 3:1 à environ 200:1, le plus préférablement d'environ 4:1 à environ 35:1 ; ou
dans lequel le groupe de surface lié par covalence est une phase liée en C4 à C30, un aromatique, un phénylalkyle, un fluoro-aromatique, un phénylhexyle, un pentafluorophénylalkyle, un chiral ou une phase liée polaire intégrée, plus préférablement une phase liée en C18.

3. Matériau chromatographique de haute pureté selon la revendication 1, dans lequel le groupe de surface formant une paire d'ions basique comprend un fragment pyridinyle, de préférence le groupe de surface formant une paire d'ions basique comprend un fragment 2-pyridinyl-éthylène.

4. Matériau chromatographique de haute pureté selon la revendication 1, dans lequel le contre-ion d'acide sulfonique est un contre-ion d'acide paratoluène sulfonique.

5. Matériau chromatographique de haute pureté selon la revendication 1, dans lequel le groupe de surface formant une paire d'ions basique comprend un fragment de l'une des structures suivantes : 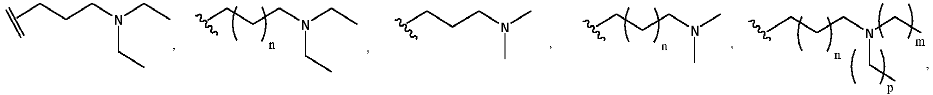 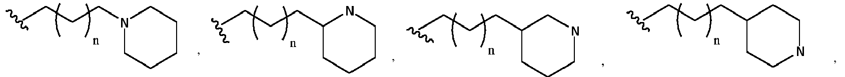 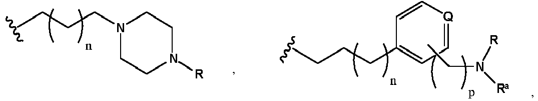 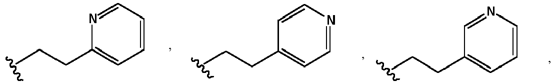 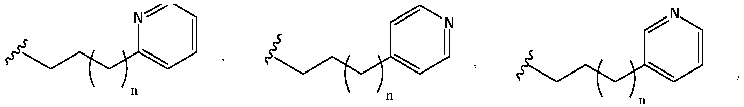 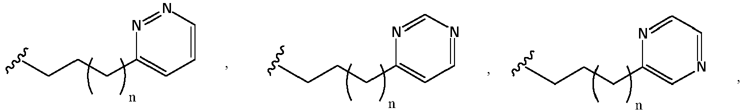 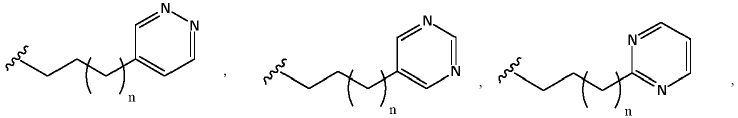 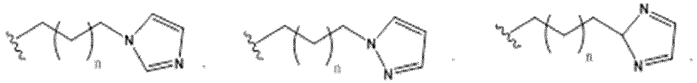 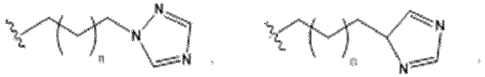 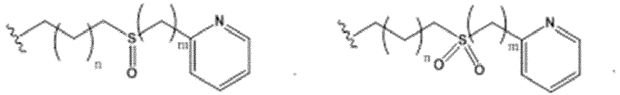 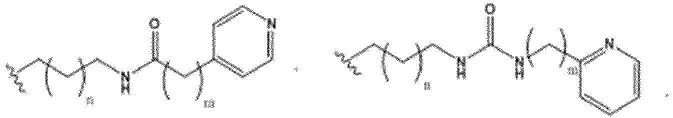 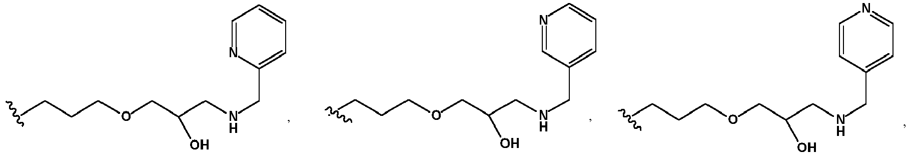 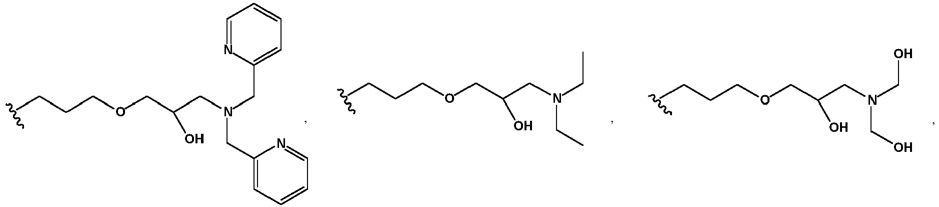 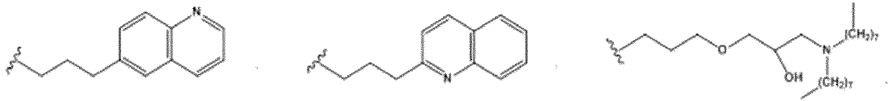 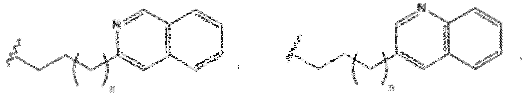 dans lequel
chaque instance de m, n et p est indépendamment un entier de 0 à 18 ; et
chaque instance de R et R^{a} est indépendamment un groupe d'échange alkyle, alcényle, alcynyle, aryle, cyano, amino, diol, nitro, ester, cation ou anion, un groupe alkyle ou aryle contenant des fonctionnalités polaires intégrées ou des fragments chiraux.

6. Matériau chromatographique de haute pureté selon la revendication 4, dans lequel le pourcentage des groupes de surface formant des paires d'ions convertis en fractions liées par paires d'ions est de 1 % à 100 %, de préférence de 10 % à 100 %, plus préférablement de 25 % à 100 %.

7. Matériau chromatographique de haute pureté selon la revendication 1, dans lequel la concentration de la fraction de paires d'ions sur la surface du matériau est inférieure à environ 10 µmol/m², de préférence inférieure à environ 2 µmol/m², plus préférablement inférieure à environ 0,5 µmol/m² ; ou
d'environ 0,01 µmol/m² à environ 10 µmol/m², de préférence d'environ 0,25 µmol/m² à environ 5 µmol/m², plus préférablement d'environ 0,5 µmol/m² à environ 2 µmol/m².

8. Matériau chromatographique de haute pureté selon la revendication 1, comprenant en outre un matériau de noyau chromatographique, de préférence dans lequel le noyau chromatographique est un matériau de silice, un matériau inorganique/organique hybride, un matériau superficiellement poreux, un matériau inorganique avec une couche de surface hybride, un matériau hybride avec une couche de surface inorganique, ou un matériau hybride avec une couche de surface hybride différente.

9. Matériau chromatographique de haute pureté selon la revendication 1, dans lequel le matériau est sous la forme d'une particule, d'un monolithe ou d'un matériau superficiellement poreux.

10. Matériau chromatographique de haute pureté selon la revendication 1, dans lequel ledit matériau chromatographique a une surface spécifique d'environ 25 à 1 100 m²/g, de préférence d'environ 80 à 500 m²/g, plus préférablement d'environ 120 à 330 m²/g ; ou
ledit matériau chromatographique a un volume de pores d'environ 0,15 à 1,7 cm³/g, de préférence d'environ 0,5 à 1,3 cm³/g, dans lequel la surface et le volume des pores sont déterminés par le procédé de sorption N2 multipoints, dans lequel la surface est calculée en utilisant la méthode BET, et dans lequel le volume des pores est une valeur ponctuelle déterminée pour P/P₀ > 0,98.

11. Matériau chromatographique de haute pureté selon la revendication 1, dans lequel ledit matériau chromatographique a une surface microporeuse inférieure à environ 110 m²/g, de préférence inférieure à environ 105 m²/g, plus préférablement inférieure à environ 80 m²/g, le plus préférablement inférieure à environ 50 m²/g, dans lequel la surface microporeuse est déterminée par le procédé de sorption N2 multipoints, dans lequel la surface microporeuse est un diamètre cumulatif de pores d'adsorption pour des pores < 34 Å soustraits d'une surface spécifique du matériau chromatographique, et dans lequel la surface spécifique est calculée en utilisant la méthode BET.

12. Matériau chromatographique de haute pureté selon la revendication 1, dans lequel ledit matériau chromatographique a un diamètre de pore moyen d'environ 20 à 1 500 Å, de préférence d'environ 50 à 1 000 Å, plus préférablement d'environ 100 à 750 Å, le plus préférablement d'environ 110 à 500 Å, dans lequel le diamètre des pores est déterminé par la méthode de sorption N2 multipoints, et dans lequel le diamètre moyen des pores est calculé à partir d'une branche de désorption d'une isotherme N2 à l'aide de la méthode BJH.

13. Matériau chromatographique de haute pureté selon la revendication 1, dans lequel le matériau a été modifié en surface, de préférence dans lequel le matériau a été modifié en surface par l'un des éléments suivants :
(a) le revêtement avec un polymère,
(b) le revêtement avec un polymère par une combinaison de modification de groupe organique et de groupe silanol,
(c) la combinaison de modification de groupe organique et de revêtement avec un polymère,
(d) la combinaison de modification du groupe silanol et de revêtement avec un polymère,
(e) la formation d'une liaison covalente organique entre le groupe organique du matériau et le réactif modificateur,
(f) la combinaison de modification de groupe organique, de modification de groupe silanol et de revêtement avec un polymère.

14. Matériau chromatographique de haute pureté selon la revendication 1, comprenant en outre une nanoparticule dispersée dans le matériau, de préférence dans lequel la nanoparticule est un mélange de plus d'une nanoparticule, la nanoparticule est présente dans < 20 % ou < 5 % en poids du nanocomposite, la nanoparticule est cristalline ou amorphe, la nanoparticule est une substance qui comprend une ou plusieurs fractions choisies dans le groupe constitué de carbure de silicium, d'aluminium, de diamant, de cérium, de noir de carbone, de nanotubes de carbone, de zirconium, de baryum, de cérium, de cobalt, de cuivre, d'europium, de gadolinium, de fer, de nickel, de samarium, de silicium, d'argent, de titane, de zinc, de bore, de leurs oxydes et de leurs nitrures, la nanoparticule est une substance qui comprend une ou plusieurs fractions choisies dans le groupe constitué de nano-diamants, de carbure de silicium, de dioxyde de titane, de boronitrure cubique, ou la nanoparticule a un diamètre inférieur ou égal à 200 nm, de préférence inférieur ou égal à 100 nm, plus préférablement inférieur ou égal à 50 nm, le plus préférablement inférieur ou égal à 20 nm.
